Europäisches Patentamt

European Patent Office

Office européen des brevets

(19)

(11) EP 0 595 207 B1

(12) **EUROPÄISCHE PATENTSCHRIFT**

(45) Veröffentlichungstag und Bekanntmachung des Hinweises auf die Patenterteilung:
**29.01.1997   Patentblatt 1997/05**

(51) Int Cl.[6]: **G02F 1/35**

(21) Anmeldenummer: **93117090.6**

(22) Anmeldetag: **21.10.1993**

(54) **Nichtlineare optische Signalverarbeitungseinrichtung**

Nonlinear optical signal processing device

Dispositif optique non-linéaire de traitement du signal

(84) Benannte Vertragsstaaten:
**BE DE FR GB IT**

(30) Priorität: 26.10.1992  DE 4235969
30.11.1992  DE 4240123

(43) Veröffentlichungstag der Anmeldung:
**04.05.1994   Patentblatt 1994/18**

(73) Patentinhaber: **SIEMENS AKTIENGESELLSCHAFT**
**80333 München (DE)**

(72) Erfinder: **Noé, Reinhold, Prof. Dr. Ing.**
**D-33100 Paderborn (DE)**

(56) Entgegenhaltungen:
**EP-A- 0 459 514**

• **IEEE PHOTONICS TECHNOLOGY LETTERS, Bd. 4, Nr. 3, März 1992, New York US, Seiten 260-263; N.A. WHITAKER et al.: 'Polarization-Independent All-Optical Switching'**
• **ELECTRONICS LETTERS, Bd. 28, Nr. 20, 24. September 1992, Stevenage GB, Seiten 1864-1866; K. UCHIYAMA et al.: 'Ultrafast Polarization-Independent All-Optical Switching Using a Polarization Diversity Scheme in the Nonlinear Optical Loop Mirror'**

**Beschreibung**

Die Erfindung betrifft eine nichtlineare optische Signalverarbeitungseinrichtung nach dem Oberbegriff der Ansprüche 1 und 7.

Die Erfindung betrifft weiter eine nichtlineare optische Signalverarbeitungseinrichtung entsprechend dem Oberbegriff des Anspruchs 21.

In der optischen Signalverarbeitung werden nichtlineare Effekte gezielt eingesetzt, besonders der Kerr-Effekt spielt dabei wegen seiner hohen Ansprechgeschwindigkeit eine große Rolle. Die Erfindung läßt sich für solche Einrichtungen zur nichtlinearen optischen Signalverarbeitung einsetzen, bei denen ein starkes optisches Signal, das Pumpsignal, mindestens einen Parameter eines anderen, meist schwächeren optischen Signals, des Probensignals, verändert. Bei dem Parameter handelt es sich z.B. um die optische Phase, Ausbreitungsgeschwindigkeit, Frequenzgehalt, Polarisation und/oder Leistung.

Eine Einrichtung entsprechend den Oberbegriffen der Ansprüche 1 bzw. 7 sowie entsprechend dem Oberbegriff des Anspruchs 21 ist aus Electronics Letters, Band 28, Nr. 20, 1992, Seiten 1864 bis 1866 bekannt.

Eine bekannte Einrichtung zur nichtlinearen optischen Signalverarbeitung ist der aus IEEE Photonics Technology Lett., Vol. 4, März 1992, Seiten 260 bis 263 bekannte nichtlineare optische Faserschleifenspiegel. In dieser Einrichtung wird durch Applikation eines Pumpsignals (control beam) ein Probensignal (signal beam) wahlweise zu einem Ausgang (XMIT) geschaltet. Das Probensignal wird über einen Eingang in den Faserspiegel eingekoppelt. Probensignalanteile durchlaufen die Schleife des Faserspiegels in beiden Richtungen des als nichtlineares Kerr-Medium dienenden Lichtwellenleiters. Die durch den Kerr-Effekt bedingte nichtlineare Phasenverschiebung Df, die ein Probensignal in einem Lichtwellenleiter durch ein an der gleichen Stelle und zur gleichen Zeit vorhandenes, vergleichsweise starkes optisches Pumpsignal erfährt, beträgt

$$D\phi = 4\pi n_2 PL / (xAl)$$

wobei P die optische Pumpleistung, A der Lichtwellenleiterquerschnitt, L die Lichtwellenleiterlänge, 1 die Lichtwellenlänge und $n_2$ eine Konstante sind. Die Konstante $n_2$ hat für die üblichen Lichtwellenleiter aus Quarzglas etwa die Größe $3*10^{-16}$ cm$^2$/W. Wie aus IEEE Photonics Technology Letters, Band 4, No. 4, April 1992, Seiten 362 bis 365 bekannt ist, weisen andere Materialien einen etwa hundertmal größeren Kerr-Effekt auf, so daß die Pumpleistung P niedriger und/oder die Lichtwellenleiterlange L geringer sein kann. Die Größe x ist dimensionslos. Sie hat den Wert 1, wenn die optischen Polarisationen von Probensignal und Pumpsignal identisch sind und vergrößert sich bei zunehmenden Diskrepanzen zwischen den beiden Polarisationszuständen bis zum Maximalwert 3, der für orthogonale Polarisationen von Probensignal und Pumpsignal gilt. Bei Abwesenheit des Pumpsignals erfährt das Signal in beiden Richtungen gleiche, lediglich lineare Phasenverschiebungen durch die Laufzeit im Lichtwellenleiter. Da sich bei Kopplung eines Lichtsignals von einem Lichtwellenleiter in einen anderen eine Phasenverschiebung dieses Lichtsignals um 90° ergibt, addieren sich die in beiden Richtungen umlaufenden Probensignale dann in Phase, wenn der den Eingang des nichtlinearen optischen Faserschleifenspiegels bildende Koppler von beiden optischen Signalen gleich oft und in gleicher Weise durchlaufen wird. Diese Bedingung ist erfüllt für Lichtsignale, die am Probensignaleingang wieder austreten. Deshalb wirkt die Anordnung bei Abwesenheit eines Pumpsignals wie ein Spiegel. Bei Anwesenheit eines Pumpsignals, das die Schleife des Faserspiegels nur in einer Richtung durchläuft, erfährt ein Probensignal, für das die Pumpleistung größer als Null ist, d.h. das mit dem Pumpsignal zeitlich und räumlich überlappen, eine optische Phasenverschiebung. Falls das Pumpsignal keine konstante Leistung besitzt, sondern beispielsweise aus kurzen Impulsen besteht, wird das in die gleiche Richtung wie das Pumpsignal und gleichzeitig mit den Pumpsignalpulsen laufende Probensignal im Mittel einer größeren Pumpleistung unterworfen sein als das in der Gegenrichtung laufende entsprechende Probensignal. Wegen des Phasenunterschieds tritt das Probensignal nicht mehr oder nicht mehr vollständig am Probensignaleingang aus, sondern vollständig oder teilweise am Ausgang (XMIT).

Unter der Bezeichnung 'Kerr-Effekt' ist gemäß neuerer Nomenklatur nicht allein die Änderung der Brechzahl eines Mediums bzw. des Phasenwinkels eines das Medium durchlaufenden optischen Signals durch - wie von Kerr untersucht - ein statisches elektrisches Feld, sondern auch - und insbesondere - durch das elektrische Feld des das Medium durchlaufende optischen Signals oder Signalgemisches. Zu den Manifestierungen dieses allgemeinen, nichtlinearen Kerr-Effekts zählen

- die optische Selbstphasenmodulation eines optischen Signals durch sich selbst,

- die in der zitierten Literaturstelle verwendete beschriebene Kreuzphasenmodulation eines optischen Signals durch ein anderes optisches Signal,

- die optische Frequenzverschiebung eines optischen Signals durch ein zeitveränderliches anderes optisches Signal, entsprechend einer zeitveränderlichen Kreuzphasenmodulation,

- die optische Drei- bzw. Vierwellenmischung, wobei aus zwei bzw. drei optischen Signalen verschiedener optischer Wellenlängen ein drittes bzw. viertes optisches Signal einer weiteren Wellenlänge generiert wird.

Der Kerr-Effekt bzw. seine Manifestationen werden durch vom Wert Null verschiedene nichtlineare Suszeptibilitäten $c_3$ hervorgerufen, die eine Polarisation des Mediums proportional zur dritten Potenz von elektrischen Feldern bewirken. Zum Ausnützen der Kreuzphasenmoduation, der optischen Frequenzverschiebung und der Drei- bzw. Vierwellenmischung werden in der Regel Signale verschiedener optischer Wellenlängen vorgesehen.

Wie man aus der Polarisationsabhängigkeit der Größe x sieht, ist die durch den Kerr-Effekt erzielte Phasenänderung in hohem Maße abhängig von den Polarisationen des Probensignals und des Pumpsignals, so daß ohne besondere Vorkehrungen mit einer Polarisationsabhängigkeit der Funktion einer auf dem Kerr-Effekt beruhenden Phasenänderung zu rechnen ist. Bei der bekannten Anordnung wird eine näherungsweise von der Polarisation des Pumpsignals unabhängige Funktion dadurch erzielt, daß das Pumpsignal in zwei orthogonale Polarisationskomponenten zerlegt wird, deren eine verzögert wird und die anschließend mit gleichen Polarisationen wieder zusammengeführt werden. Eine gewisse zeitliche Abhängigkeit des Probensignals vom Pumpsignal ist allerdings nicht zu vermeiden. In der zitierten Arbeit aus IEEE Photonics Technology Lett., Vol. 4, März 1992, Seiten 260 bis 263, wird eine Verzögerungszeit von 160 ps angegeben bei 350 ps intrinsischer Breite des durch einen kurzen Pumpimpuls gegebenen zeitlichen Schaltfensters. Das tatsächliche Schaltfenster wird sich also je nach Polarisation des Pumpsignals um bis zu 160 ps verschieben und seine Form verändern, was für viele Anwendungen unerwünscht ist. Ein weiterer Nachteil der bekannten Anordnung ist, daß nur Probensignale einer bestimmten Polarisation verarbeitet werden können.

Statt einer Glasfaser als nichtlineares Kerr-Medium kann bei nichtlinearen optischen Faserschleifenspiegeln in allen Fällen natürlich auch ein beliebiger anderer Lichtwellenleiter mit Kerr-Effekt eingesetzt werden. Dieser Tatsache trägt die alternative Bezeichnung des nichtlinearen optischen Faserschleifenspiegels als nichtlineares Sagnac-Interferometer Rechnung, die beispielsweise im Tagungsband der Optical Fiber Communications Conference (OFC '92), Vortrag TuC3, Seite 12, Band 1, San José, USA, 1992, statt dem Terminus eines nichtlinearen optischen Faserschleifenspiegels verwendet wird. Auch in dieser Anordnung können nur Probensignale einer bestimmten Polarisation verarbeitet werden, dasselbe gilt für die Pumpsignale.

In der Regel treten das Pumpsignal oder Anteile davon auch an mindestens einem Ausgang einer auf dem Kerr-Effekt beruhenden Signalverarbeitungseinrichtung auf. Zur Nutzung des Probensignals PR allein müssen deshalb in der Regel eines oder mehrere optische Filter OF eingesetzt werden, die die Wellenlänge LPU der störenden Pumpsignale PU abdämpfen und die Wellenlänge LPR der erwünschten Probensignale oder Anteilen davon möglichst ungedämpft durchlassen.

Eine von der Polarisation des Probensignals PR unabhängige Einrichtung zur Ausnutzung des Kerr-Effekts ist aus Electronics Letters, Band 28, Nr. 20, 1992, Seiten 1864 bis 1866, bekannt. Die Schaltfunktion beruht auf einem unter Verwendung polarisationserhaltender Lichtwellenleiter aufgebauten nichtlinearen optischen Faserspiegel bzw. nichtlinearen Sagnac-Interferometer. In dieser bekannten Arbeit ist die Funktion zwar von der Polarisation des Probensignals unabhängig, ist jedoch von der Polarisation der Pumpsignale abhängig.

Aus Electronics Letters, Band 28, Nr. 11, 21. Mai 1992, Seiten 1070 bis 1072, ist eine Möglichkeit bekannt, polarisationsunabhängig ein Probensignal zu schalten. Die Schaltfunktion nutzt zwar den Kerr-Effekt, aber beruht nicht auf einem nichtlinearen optischen Faserspiegel. In der genannten Arbeit, in der der Kerr-Effekt zur optischen Frequenzverschiebung des Probensignals eingesetzt wird, verändert sich beim Schalten die optische Frequenz bzw. Wellenlänge des Probensignals. Während der Anstiegszeit eines optischen Pumpsignals PU verändert sich die Phase des Probensignal PR nichtlinear durch den Kerr-Effekt als Funktion der Zeit, so daß die Ableitung dieser nichtlinearen Phasenänderung nach der Zeit einer optischen Frequenzverschiebung des optischen Probensignals PR entspricht. Während der Abfallzeit eines optischen Pumpsignals PU verändert sich die Phase des Probensignal PR nichtlinear durch den Kerr-Effekt als Funktion der Zeit in der entgegengesetzten Richtung, so daß die Ableitung dieser entgegengesetzten nichtlinearen Phasenänderung nach der Zeit einer optischen Frequenzverschiebung des optischen Probensignals PR in die entgegengesetzte Richtung entspricht. Durch frequenz- bzw. wellenlängenselektive optische Filter läßt sich die Frequenzverschiebung in Amplitudenänderungen umformen. Das geschaltete Probensignal erhält i.a. einen Frequenzchirp, der die Bandbreite des optischen Probensignals stark erhöht. Dadurch erhöht sich auf anschließenden Lichtwellenleiterübertragungsstrecken die Dispersion des Probensignals, was die Übertragung kurzer Probensignalpulse beeinträchtigt. Die Schaltfunktion ist außerdem von Änderungen der Pulssignalform abhängig.

In der im Tagungsband der Optical Fiber Communications Conference, OFC '92, San José, USA, Beitrag Tul1, Band 1, auf der Seite 46 bis 47 beschriebenen Arbeit ist ein auf dem optischen Kerr-Effekt beruhender optischer Schalter und Demultiplexer beschrieben. Auch in diesem Fall ist die Funktion von der Polarisation des Pumpsignals abhängig. Der Kerr-Effekt wird in diesem Fall in Form der ebenfalls auf der Phasenverschiebung beruhenden Drei- bzw. Vierwellenmischung genutzt, bei der neue, weder im Probensignal noch im Pumpsignal enthaltene optische Signale entstehen.

Der Erfindung liegt die Aufgabe zugrunde, eine von der Polarisation des optischen Pumpsignals unabhängige nichtlineare optische Signalverarbeitungseinrichtung zur Beeinflussung eines Parameters eines optischen Probensignals durch das optische Pumpsignal zu realisieren, die außerdem ein von der Polarisation des Pumpsignals unabhängiges zeitliches Schaltfenster aufweist.

Diese Aufgabe wird ausgehend von einer nichtlinearen optischen Signalverarbeitungseinrichtung der eingangs genannten Art durch die in den kennzeichnenden Teilen der Ansprüche 1, 7 und 21 angegebenen Merkmale gelöst.

Die erfindungsgemäßen Anordnungen nach diesen Ansprüchen haben jeweils den Vorteil, daß eine von der Polarisation des Pumpsignals in jeder Hinsicht, also auch in Bezug auf die zeitliche Lage des Schaltfensters, unabhängige optische nichtlineare Signalverarbeitungseinrichtung realisiert wird. Ein vorteilhafter Einsatz der Erfindung ist insbesondere in Fällen möglich, in denen ein optisches Pumpsignal, von dessen Polarisation die Funktion der Einrichtung erfindungsgemäß unabhängig ist, vor dem Erreichen der Einrichtung einen nicht polarisationserhaltenden Lichtwellenleiter durchläuft. In solchen Fällen wird trotz einer unbekannten, sich verändernden und/oder beliebigen Polarisation dieses Pumpsignals beim Erreichen der erfindungsgemäßen Einrichtung die Funktion der erfindungsgemäßen Einrichtung nicht verändert.

Die Erfindung wird anhand von in der Zeichnung dargestellten Ausführungsbeispielen näher erläutert. Es zeigen:

Figur 1      ein Blockschaltbild, das das den Ansprüchen 1 bis 6 zugrunde liegende Prinzip erläutert,

Figur 2      ein Ausführungsbeispiel der in der Figur 1 enthaltenen Pumpsignaladditionsstelle der Figur 1.

Figur 3      ein Blockschaltbild, das das den Ansprüchen 7 bis 9 zugrunde liegende Prinzip erläutert,

Figur 4      ein Blockschaltbild eines Ausführungsbeispiels eines nichtlinearen Mediums oder Teilen davon mit mehreren Stücken polarisationserhaltender, doppelbrechender Lichtwellenleiter,

Figur 5      ein Blockschaltbild einer weiteren erfindungsgemäßen Einrichtung in Form eines nichtlinearen optischen Faserschleifenspiegels,

Figur 6      ein weiteres Blockschaltbild einer erfindungsgemäßen Einrichtung in Form eines nichtlinearen optischen Faserschleifenspiegels,

Figur 7      ein Blockschaltbild, das die Zuführung von Pumpsignalanteilen zu in Figur 6 dargestellten Pumpsignaladditionsstellen erläutert,

Figur 8      ein weiteres Blockschaltbild, das die Zuführung eines Pumpsignals zu einer in Figur 6 dargestellten Pumpsignaladditionsstelle erläutert.

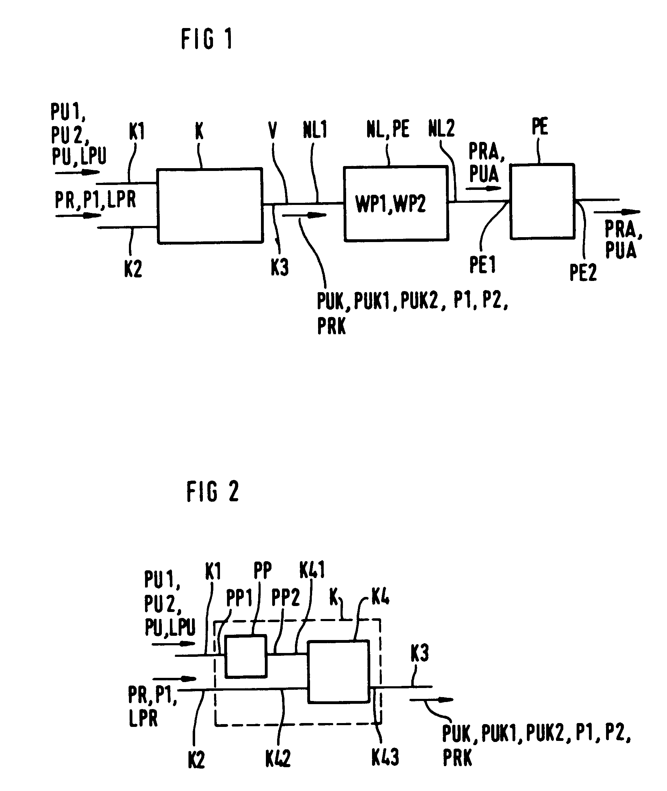

Zunächst sollen in Verbindung mit Figur 1 die Ansprüche 1 und 7 näher erläutert werden. Das in der Figur 1 dargestellte Ausführungsbeispiel einer nichtlinearen optischen Signalverarbeitungseinrichtung weist eine Pumpsignaladditionsstelle K mit mindestens einem Pumpsignaltor K1, mindestens einem Probensignaltor K2 und mindestens einem Ausgangstor K3 auf. Als Pumpsignaladditionsstelle K läßt sich z.B. ein Glasfaser-Richtkoppler, ein optischer Richtkoppler in einem integriertoptischen Bauteil, oder ein Strahlteilerwürfel verwenden. Die Kopplungsverhältnisse dieser Bauteile zwischen verschiedenen Toren können polarisationsabhängig ausgebildet sein. Diese Kopplungsverhältnisse und/oder eine solche Polarisationsabhängigkeit der Kopplungsverhältnisse können wellenlängenabhängig ausgebildet sein. In das Probensignaltor K2 wird ein optisches Probensignal PR mit der optischen Probensignal-Wellenlänge LPR und der Probensignalpolarisation P1 eingespeist. In das Pumpsignaltor K2 wird ein optisches Pumpsignal PU mit der Pumpsignal-Wellenlänge LPU eingespeist. In vielen Anwendungsfällen sind die Probensignal-Wellenlänge LPR und die Pumpsignal-Wellenlänge LPU verschieden. Am Ausgangstor K3 treten zumindest Anteile PUK des Pumpsignals PU und zumindest Anteile PRK des Probensignals PR auf. Mit dem Ausgangstor K3 der Pumpsignaladditionsstelle K3 ist ein Eingang NL1 eines mindestens einen nicht vernachlässigbaren nichtlinearen optischen Effekt aufweisendes Mediums NL über eine optische Verbindung V verbunden. In verschiedenen Ausführungsbeispielen handelt es sich bei der Verbindung V um einen möglichst verlustarmen Lichtwellenleiter. In anderen Ausführungsbeispielen, wie zum Beispiel bei manchen Ausführungen eines nichtlinearen optischen Faserschleifenspiegels kann die Verbindung V einen Koppler aufweisen, der ein wellenlängen- und/oder polarisationsabhängiges Koppelverhältnis besitzt. An einem Ausgang NL2 des Mediums NL tritt das dem nichtlinearen optischen Effekt unterworfene Probensignal PRA auf. Außerdem können an dieser Stelle zumindest Anteile PUA des Pumpsignals PU auftreten. Der nichtlineare optische Effekt beeinflußt die Probensignalanteile PRK bezüglich mindestens einer der Größen Phase, Ausbreitungsgeschwindigkeit, Frequenzgehalt, Polarisation und Leistung. Die Stärke der Beeinflussung hängt von der Leistung und/oder vom zeitlichen Verlauf der Leistung des optischen Pumpsignalanteils PUK und/oder des optischen Pumpsignals PU ab.

Bei der Bezeichnung der Anschlußtore NL1, NL2 des Mediums NL wurden hier die Begriffe Eingang für NL1 und Ausgang für NL2 gewählt. Diese Bezeichnungen sind willkürlich. Sie sind zutreffend für die Proben- und Pumpsignalanteile PUK, PRK, PUA, PRA. Natürlich können, etwa im Fall des aus IEEE Photonics Technology Lett., Vol. 4, März 1992, Seiten 260 bis 263 bekannten optischen Faserschleifenspiegels, weitere Signale auftreten, wie z.B. von optischen Pumpsignalen im wesentlichen nicht beeinflußte Probensignalanteile, die das Medium in entgegengesetzter Richtung durchlaufen, so daß sie am Ausgang NL2 des Mediums NL eintreten und am Eingang NL1 austreten. Diese bidirektionale Verwendbarkeit des Mediums NL ergibt sich aus dem Stand der Technik.

Zur allgemeinen Formulierung der Polarisationsabhängigkeit des nichtlinearen Effekts ist hier mit WP1 bezeichnet die Wirkung eines Pumpsignals der Polarisation P1. Bei WP1 handelt es sich also um die Stärke des nichtlinearen Effekts im Medium NL bezüglich des optischen Probensignalanteils PRK durch einen eine bestimmte Leistung sowie die Probensignalpolarisation P1 aufweisenden Anteil PUK1 des optischen Pumpsignalanteils PUK. Mit WP2 ist hier bezeichnet die Wirkung eines Pumpsignals mit der zur Polarisation P1 orthogonalen Polarisation P2. Bei WP2 handelt es sich also um die Stärke des nichtlinearen Effekts im Medium NL bezüglich des optischen Probensignalanteils PRK durch einen dieselbe bestimmte Leistung wie der Anteil PUK1 des optischen Pumpsignalanteils PUK, sowie eine zur Probensignalpolarisation P1 orthogonale Polarisation P2 aufweisenden Anteil PUK2 des optischen Pumpsignalanteils PUK. Die Größe

$$x = WP1/WP2$$

bezeichnet hier den Quotienten der Wirkungen WP1 und WP2. Die Größe x ist eine positive, reelle, von 1 verschiedene Zahl. Wenn x gleich 1 wäre, so wäre der nichtlineare Effekt polarisationsunabhängig und die Signalverarbeitungseinrichtung wäre deshalb auch bereits nach dem Stand der Technik polarisationsunabhängig.

Gemäß dem kennzeichnenden Teil des Anspruchs 1 wird die Aufgabe, die genannte Beeinflussung von der Polarisation des Pumpsignals PU unabhängig zu machen, durch das erfindungsgemäße Prinzip gelöst, daß erste Anteile PU1 des optischen Pumpsignals PU, welche einen die Probensignalpolarisation P1 aufweisenden Anteil PUK1 des gekoppelten Pumpsignals PUK erzeugen, durch die Pumpsignaladditionsstelle K und/oder eine polarisierend wirkende Einrichtung PE um den Faktor x stärker gedämpft werden als zweite Anteile PU2 des optischen Pumpsignals PU, welche einen die dazu orthogonale Polarisation P2 aufweisenden Anteil PUK2 des gekoppelten Pumpsignals PUK erzeugen, so daß Beeinflussung und besonders zeitlicher Verlauf der Beeinflussung der austretenden Probensignalanteile PRA durch das optische Pumpsignal PU von der Polarisation dieses Pumpsignals PU wenigstens näherungsweise unabhängig sind.

Betreffend die Nomenklatur sei hier vermerkt, daß sich sowohl der Probensignalanteil PRA als auch das gekoppelte Probensignal PRK als 'beeinflußt' bezeichnen lassen, weil letzterer, sobald er in das Medium NL eintritt, beeinflußt wird, und weil der Probensignalanteil PRA im Medium NL bereits beeinflußt wurde.

Die Figur 2 betrifft eine vorteilhafte Ausgestaltung der Pumpsignaladditionsstelle K entsprechend Anspruch 2. In dieser Ausgestaltung durchläuft das Pumpsignal PU in der Pumpsignaladditionsstelle K einen Polarisator PP, welcher erste Pumpsignalanteile PU1, die erste gekoppelte Pumpsignale PUK1 mit der Probensignalpolarisation P1 (als erster Polarisation) des gekoppelten Pumpsignals PUK erzeugen, um den Faktor x stärker dämpft als zweite Pumpsignalanteile PU2, die zweite gekoppelte Pumpsignalanteile PUK2 mit der dazu orthogonalen zweiten Polarisation P2 erzeugen. Der Polarisator PP besitzt also ein Extinktionsverhältnis der Größe x zwischen der unverändert übertragenen ersten Polarisation P1 und der unverändert übertragenen zweiten Polarisation P2. Der Eingang PP1 des Polarisators PP ist mit dem Eingang K1 der Pumpsignaladditionsstelle K verbunden. Der Ausgang PP2 des Polarisators PP mit der Extinktion x ist mit einem Pumpsignaltor K41 eines Kopplers K4 verbunden. Ein Probensignaltor K42 des Kopplers K4 ist mit dem Probensignaltor K1 der Pumpsignaladditionsstelle K verbunden. Ein Ausgangstor K43 des Kopplers K4 ist mit dem Ausgangstor K3 der Pumpsignaladditionsstelle K verbunden. Der Koppler K4 weist für die Pumpsignale PU ein wenigstens näherungsweise polarisationsunabhängiges Koppelverhältnis auf. Entsprechend den Merkmalen des Oberbegriffs des Anspruchs 1 passieren Teile des Pumpsignals PU den Polarisator PP mit der Extinktion x, erreichen das Pumpsignaltor K41 des Kopplers K4 und werden vom Koppler K4 wenigstens teilweise an das Ausgangstor K43 und somit an das Ausgangstor K3 übertragen. In ähnlicher Weise erreicht das Probensignal PR das Probensignaltor K42 des Kopplers K4 und wird vom Koppler K4 wenigstens teilweise an das Ausgangstor K43 und somit an das Ausgangstor K3 übertragen.

Eine vorteilhafte Ausgestaltung der Pumpsignaladditionsstelle K ist in Anspruch 3 beschrieben. In dieser Ausgestaltung besteht die Pumpsignaladditionsstelle K aus einem zumindest für das Pumpsignal PU polarisationsabhängigen Koppler. Der Koppler koppelt Pumpsignalanteile PUU1, die die Pumpsignalanteile PUK1 der Probensignalpolarisation P1 erzeugen, bei der Übertragung vom Pumpsignaleingangstor K1 zum Ausgangstor K3 um mindestens näherungsweise den Faktor x schwächer als Pumpsignalanteile PUU2, die Pumpsignalanteile PUK2 der dazu orthogonalen Polarisation P2 des Pumpsignalanteils PUK erzeugen. Die mögliche Abhängigkeit des Koppelgrades dieses polarisationsabhängigen Kopplers von der Polarisation des Probensignals PR ist ohne Bedeutung, weil das Probensignal PR die in vielen Fällen bekannte und konstante erste Polarisation P1 aufweist. Wenn diese Polarisation P1 nicht konstant ist, muß die Abhängigkeit des Koppelgrades von der Polarisation des Pumpsignals PU bezüglich der ersten Polarisation P1 variabel gestaltet werden. Für den einfacheren üblicherweise auftretenden Fall, daß die Probensignalpolarisation bekannt und konstant ist, kann die Abhängigkeit des Koppelgrades von der Polarisation des Pumpsignals PU fest und konstant gestaltet werden, was technisch einfacher ist. Im diesem Fall kann der Koppler z.B. ein einfacher polarisationsabhängiger faser-, integriert- oder strahlenoptischer Richtkoppler sein.

Anspruch 4 betrifft eine vorteilhafte Ausgestaltung des polarisationsabhängigen Kopplers nach Anspruch 3. Da der nichtlineare Effekt i.a. relativ schwach ist, benötigt man i.a. große Pumpleistungen und/oder Interaktionslängen des Mediums NL. Einen bei gegebener Pumpleistung des Pumpsignals PU möglichst hohen nichtlinearen Effekt erzielt man dann, wenn für Pumpsignale PU, die so polarisiert sind, daß sie nach der Pumpsignaladditionsstelle K und im Medium NL diejenige Polarisation besitzen, die das Probensignal PRK schwächer beeinflußt, möglichst vollständig vom Pumpsignaltor K1 zum Ausgangstor K3 gekoppelt werden.

Anspruch 5 betrifft eine weitere vorteilhafte Ausgestaltung des polarisationsabhängigen Kopplers nach Anspruch 3. Um möglichst wenig Probensignalleistung in der Pumpsignaladditionsstelle zu verlieren, wird man versuchen, Pumpsignale PR zumindest der Polarisation P1 möglichst vollständig vom Probensignaltor K2 zum Ausgangstor K3 zu koppeln.

Mit einem wellenlängenunabhängigen Koppler wäre es nicht möglich, die Bedingungen der Ansprüche 4 und 5 zu einem möglichst großen Grad gleichzeitig erfüllen zu können. Daher ist es vorteilhaft, wenn der die Pumpsignaladditionsstelle K darstellende polarisationsabhängige Koppler von der Wellenlänge eingespeister optischer Signale abhängige Koppelstärken aufweist. Mit Hilfe einer Wellenlängenabhängigkeit ist es beispielsweise möglich, Probensignale PR der Polarisation P1 vom Probensignaltor K1 vollständig zum Ausgangstor K3 zu übertragen und gleichzeitig Pumpsignalanteile PUU1, die am Ausgangstor K3 Pumpsignalanteile PUK1 der Polarisation P1 erzeugen, vom Probensignaltor K1 zu einem von Null verschiedenen Anteil, falls gewünscht sogar vollständig zum Ausgangstor K3 zu übertragen. Mit einem wellenlängenunabhängigen Koppler wäre das nicht möglich.

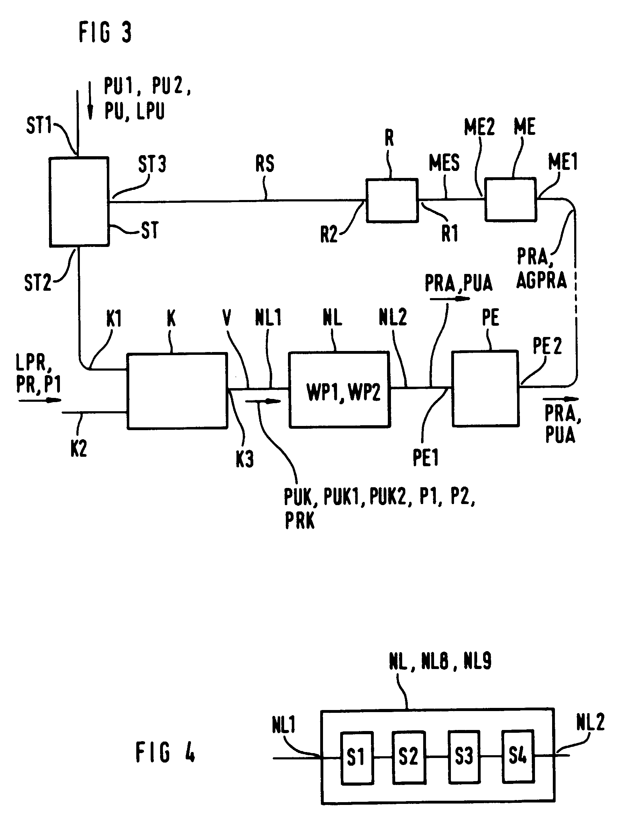

Die in Figur 3 dargestellte polarisationsabhängige Ausgestaltung der Pumpsignaladditionsstelle K bezweckt eine Kompensation der Abhängigkeit des nichtlinearen Effekts von der Polarisation des Pumpsignals. Alternativ dazu kann man die Leistung oder die Polarisation des Pumpsignals so einregeln, daß der nichtlineare Effekt polarisationsunabhängig wird. Gemäß dem kennzeichnenden Teil des Anspruchs 7 wird die Aufgabe, die genannte Beeinflussung von der Polarisation des Pumpsignals PU unabhängig zu machen, durch das erfindungsgemäße Prinzip gelöst, daß einem Eingang ME1 einer Meßeinrichtung ME zumindest Teile der austretenden, durch einen nichtlinearen optischen Effekt beeinflußten Probensignalanteile PRA oder daraus abgeleiteter Signale AGPRA zugeführt werden. Die Meßeinrichtung ME weist i.a. einen Photodetektor auf, mit dem beeinflußte Probensignalanteile PRA oder daraus abgeleitete Signale AGPRA detektiert werden. Bei den abgeleiteten Signalen handelt es sich beispielsweise um optische Probensignalanteile, die am Ausgang oder an den Ausgängen eines nichtlinearen optischen Faserschleifenspiegels auftreten. Die Meßeinrichtung ME ist so ausgebildet, daß ein an einem Ausgang ME2 dieser Meßeinrichtung ME auftretendes Meßsignal MES

- von der Stärke der Beeinflussung der Probensignalanteile PRA durch einen nichtlinearen optischen Effekt und/oder

- von der Differenz zwischen der Stärke der Beeinflussung der Probensignalanteile PRA durch einen nichtlinearen optischen Effekt und einer vorgegebenen, anzustrebenden Sollstärke dieser Beeinflussung

abhängt. Ein Eingang R1 eines Reglers R ist mit dem Ausgang ME2 dieser Meßeinrichtung ME verbunden. An einem Ausgang R2 dieses Reglers R tritt ein Stellsignal RS auf. Der Ausgang R2 dieses Reglers R ist mit einem Stelleingang ST3 eines Stellglieds ST verbunden, welches das Pumpsignal PU, welches an einem Eingang ST1 in dieses Stellglied ST eintritt und an einem Ausgang ST2 aus diesem Stellglied ST austritt, bezüglich mindestens einer der Größen Polarisation und Leistung einer Veränderung unterwirft, die von diesem Stellsignal RS abhängt, so daß Beeinflussung und besonders zeitlicher Verlauf der Beeinflussung der austretenden Probensignalanteile PRA durch das optische Pumpsignal PU von der Polarisation dieses Pumpsignals PU wenigstens näherungsweise unabhängig sind.

In vorteilhaften Ausführungsbeispielen der Erfindung unterwirft das Stellglied ST das Pumpsignal PU bezüglich seiner Leistung einer Veränderung. Zu diesem Zweck weist das Stellglied ST einen durch das an dem Stelleingang ST3 angelegte Stellsignal RS regelbaren optischen

- Amplitudenmodulator oder

- Verstärker

auf. Ein optischer Amplitudenmodulator kann ein Mach-Zehnder-Interferometer, beispielsweise als integriert-optische Schaltung in Lithiumniobat oder Indiumphosphid, aufweisen, oder einen Elektroabsorptionsmodulator. Ein optischer Verstärker kann beispielsweise ein Halbleiter-Laserverstärker, etwa aus Indiumphosphid, sein, dessen Pumpstrom als Stellsignal dient, oder ein Erbium-dotierter Faserverstärker, wobei der Pumpstrom des den Erbium-dotierten Faserverstärker pumpenden Lasers als Stellsignal dient. Die Leistung von am Ausgang ST2 dieses Stellglieds ST auftretenden Pumpsignalen bei Auftreten eines optischen Pumpsignals PU, das ausschließlich aus ersten Anteilen PU1 besteht, welche einen die erste Polarisation P1 aufweisenden ersten Anteil PUK1 des gekoppelten optischen Pumpsignals PUK erzeugen, wird durch dieses Stellglied ST um wenigstens näherungsweise den Faktor x stärker gedämpft und/oder weniger verstärkt werden als bei Auftreten eines optischen Pumpsignals PU, das ausschließlich aus zweiten Anteilen PU2 besteht, welche einen die zweite Polarisation P2 aufweisenden zweiten Anteil PUK2 des gekoppelten optischen Pumpsignals PUK erzeugen.

In anderen vorteilhaften Ausführungsbeispielen der Erfindung unterwirft das Stellglied ST das Pumpsignal PU bezüglich seiner Polarisation einer Veränderung. Das Stellglied ST weist ein durch das an diesem Stelleingang ST3 angelegte Stellsignal RS regelbares optisches Polarisationsstellglied auf. In diesen Ausführungsbeispielen der Erfindung ist durch die Rückkopplung über Meßeinrichtung ME, Regler R und Stellglied ST sichergestellt, daß die Polarisation von am Ausgang ST2 dieses Stellglieds ST auftretenden Pumpsignalen von der Polarisation des auftretenden optischen Pumpsignals PU unabhängig ist. Optische Polarisationstellglieder und dazugehörige Regelungen sind beispielsweise auf Seiten 1353 bis 1366, insbesondere in der Sektion II, des Journal of Lightwave Technology, Band 9, No. 10, Oktober 1991, und in den darin enthaltenen Literaturstellen beschrieben.

Falls die Erfindung in einem nichtlinearen optischen Faserschleifenspiegel eingesetzt wird, wählt man als Sollstärke des nichtlinearen Effekts diejenige Stärke, bei der sich maximale oder minimale Proben-Ausgangssignale ergeben. Zur Erzeugung eines geeigneten Meßsignals ME2 ist es zweckmäßig, etwa das sogenannte 'lock-in'-Verfahren zu verwenden. Bei diesem aus der Regelungstechnik zur Genüge bekannten Verfahren wird das Stellsignal ST3 mit einem Wechselsignal geringer Amplitude beaufschlagt. Dieses Wechselsignal führt zu einer Wechselsignalkomponente im beeinflußten Probensignalanteil PRA. Durch phasenrichtige Detektion eines beeinflußten Probensignalanteils PRA oder eines daraus abgeleiteten Signals AGPRA mit Hilfe eines Multiplizierers, welchem an einem Eingang die das Stellsignal ST3 beaufschlagenden Wechselsignale zugeführt werden, gewinnt man ein Meßsignal ME2, das proportional zur Abweichung dieses Stellsignals ST3 von der zum Erzeugen maximaler oder minimaler Proben-Ausgangssignale notwendigen Größe dieses Stellsignals ST3.

In vielen Anwendungsfällen ist eine Änderung der Probensignalpolarisation P1 durch das Pumpsignal nicht erwünscht. Eine solche Änderung könnte das erfindungsgemäße Ziel der Unabhängigkeit der Beeinflussung des Probensignals PR von der Polarisation des Pumpsignals PU gefährden. Als Abhilfe dienen die in den Ansprüchen 10 bis 14 beschriebenen Weiterbildungen der Erfindung.

Wenn in der erfindungsgemäßen Einrichtung eine zumindest für optische Signale der Probensignal-Wellenlänge LPR polarisierend wirkende Einrichtung PE vorgesehen ist, in der ein die erste Polarisation P1 aufweisendes erstes gekoppeltes Probensignal PRK1 in stärkerem Maße übertragen wird als ein die zweite Polarisation P2 aufweisendes zweites Probensignal PRK2, so werden Änderungen der Polarisation der austretenden Probensignalanteile PRA als Funktion der Polarisation des optischen Pumpsignals PU wenigstens näherungsweise vermieden. Eine solche polarisierend wirkende Einrichtung PE kann beispielsweise im Medium NL vorgesehen sein, bzw. das Medium NL selbst kann polarisierend wirken. Andererseits kann auch ein Eingang PE1 einer polarisierend wirkenden Einrichtung PE mit dem Ausgang NL2 des Mediums NL verbunden sein, wobei die austretenden Probensignalanteile PRA am Ausgang PE2 dieser polarisierend wirkenden Einrichtung PE austreten. Die polarisierend wirkende Einrichtung PE kann zum Erzielen der Polarisationswirkung einen Polarisator, insbesondere einen wellenlängenabhängigen Polarisator, aufweisen. In Ausführungsbeispielen der Erfindung ist es vorteilhaft, wenn eine polarisierend wirkende Einrichtung PE so wellenlängenabhängig ausgebildet ist, daß Signale der Pumpsignal-Lichtwellenlänge LPU, insbesondere bezüglich ihrer Polarisation und/oder Stärke der die Probensignalpolarisation P1 aufweisenden Komponenten im Vergleich zur Stärke der die dazu orthogonale Polarisation P2 aufweisenden Komponenten,

- in schwächerem Maße als Signale der Probensignal-Lichtwellenlänge LPR,

- nicht, oder

- in im Vergleich zu Signalen der Probensignal-Lichtwellenlänge LPR entgegengesetzter Weise

beeinflußt werden.

In vielen Fällen, beispielsweise, wenn man auch am Ausgang NL2 des Mediums NL ein Probensignal PRA bekannter und/oder fester Polarisation erzielen möchte, ist es zweckmäßig, im einen nichtlinearen Effekt aufweisende Medium NL zumindest teilweise polarisationserhaltende Lichtwellenleiter zu verwenden. Polarisationserhaltende Lichtwellenleiter werden in der Optik oft verwendet, um Änderungen der Polarisation von optischen Signalen zu verhindern. Polarisationserhaltende Lichtwellenleiter erhalten entweder alle Polarisationen, weil sie eine sehr geringe Doppelbrechung besitzen, oder sie erhalten zwei zueinander orthogonale Hauptpolarisationsmoden, weil sie eine sehr hohe Doppelbrechung, entsprechend einer merklichen Differenz der Ausbreitungsgeschwindigkeit, zwischen diesen zwei zueinander orthogonalen Hauptpolarisationsmoden besitzen. Solche stark doppelbrechende Lichtwellenleiter erhalten für ein eingespeistes optisches Signal mit einer Polarisation, die eine dieser Hauptpolarisationsmoden ist, diese Hauptpolarisationsmode an jedem Ort dieser doppelbrechenden Lichtwellenleiter. Setzt man einen Lichtwellenleiter der zuletzt genannten Art ein, kommt es wegen der i.a. kleinen nichtlinearen Effekte und der demzufolge notwendigen großen Längen des Mediums NL zu einer zeitlichen Separation von optischen Signalen verschiedener Polarisationen. Um solches zu vermeiden, kann man, entsprechend Ansprüchen 16 und 32, das einen nichtlinearen Effekt aufweisende Medium NL aus mindestens zwei Stücken S1, S2, S3, S4, ... polarisationserhaltender Lichtwellenleiter zusammensetzen, so daß die Laufzeitdifferenz für Lichtsignale der einen erhaltenen Polarisation gegenüber solchen der anderen erhaltenen Polarisation gering gehalten wird durch Aneinanderfügen von Lichtwellenleitern mit positiver sowie solchen mit negativer Laufzeitdifferenz für diese verschiedenen Polarisationen von Lichtsignalen. Die gebräuchlichsten doppelbrechenden, polarisationserhaltenden Lichtwellenleiter weisen linear polarisierte Hauptpolarisationsmoden auf.

In einem einfachen, gebräuchlichen Fall sind zwei etwa gleich lange Stücke S1, S2 eines polarisationserhaltenden Lichtwellenleiters aneinandergefügt. An der Verbindungsstelle sind die Stücke S1, S2 um 90° gegeneinander verdreht, damit die Hauptpolarisationsmoden, also die erhaltenen Polarisationen, gegeneinander vertauscht werden, so daß das Vorzeichen der Laufzeitdifferenz zwischen beiden Hauptpolarisationsmoden, d.h. den erhaltenen Polarisationen, vertauscht wird. Zur Verwendung in nichtlinearen optischen Signalverarbeitungseinrichtungen, die aber von der Polarisation des Pumpsignals nicht unabhängig sind, ist diese Ausführung beispielsweise aus Electronics Letters, Band 28, 24. September 1992, No. 20, Seiten 1864 bis 1866 bekannt.

Vorteilhafte Ausgestaltungen der Erfindung werden in Einrichtungen wie dem nichtlinearen optischen Faserschleifenspiegel bzw. nichtlinearen Sagnac-Interferometer, Einrichtungen zur optischen Vierwellenmischung, oder Einrichtungen zur optischen Frequenzverschiebung eingesetzt. Aus Electronics Letters, 2. Juli 1992, Band 28, No. 4, Seiten 1350 bis 1352 ist beispielsweise ein auf dem Kerr-Effekt als optische Nichtlinearität basierender Regenerator für optische Signale beschrieben. Als Schaltelement dient ein nichtlinearer optischer Faserschleifenspiegel, bei dem das empfangene, zu regenerierende Datensignal als Pumpsignal und das Taktsignal als Probensignal dient. In dieser Anwendung würde eine erfindungsgemäße, von der Polarisation des Pumpsignals unabhängige Ausführung des nichtlinearen optischen Faserschleifenspiegels eine von der Polarisation des empfangenen, zu regenerierenden Datensignals unabhängige Regeneration dieses Signals ermöglichen. In der erwähnten Arbeit wird auch berichtet, daß eine optische Regeneration eines empfangenen Datensignals nicht nur mit einem nichtlinearen optischen Faserschleifenspiegel, sondern mit jeder Art von auf dem optischen Kerr-Effekt beruhenden optischem Schalter möglich ist. Durch die erfindungsgemäße Ausgestaltung einer von der Polarisation des optischen Pumpsignals unabhängigen Signalverarbeitungseinrichtung ist es möglich, auch Einrichtungen zur optischen Vierwellenmischung oder Einrichtungen zur optischen Frequenzverschiebung zur von der Polarisation des Pumpsignals, also des zu regenerierenden Datensignals, unabhängigen Regeneration dieses Signals einzusetzen.

Das diesen Ausgestaltungsmöglichkeiten der Erfindung zugrundeliegende Prinzip läßt sich auch auf andere Arten der Nutzung des Kerr-Effekts und auf anderen nichtlinearen Effekten beruhende optische Signalverarbeitungseinrichtungen anwenden. Beispielsweise würde in der erwähnten Arbeit, die in Electronics Letters, Band 28, Nr. 11, 21. Mai 1992, Seiten 1070 bis 1072 dargestellt ist, eine Verwendung von Probensignalen, die mit einer Hauptachse des polarisationserhaltenden, den nichtlinearen Effekt aufweisenden Lichtwellenleiters zusammenfallen, und Verwendung eines beliebig polarisierten Pumpsignals, dessen mit der Polarisation des Probensignals auftretende Anteile aber um den Faktor x schwächer in diesen Lichtwellenleiter eingespeist werden als die dazu orthogonal polarisierten, von der Polarisation des Pumpsignals unabhängiges optisches Schalten ermöglichen.

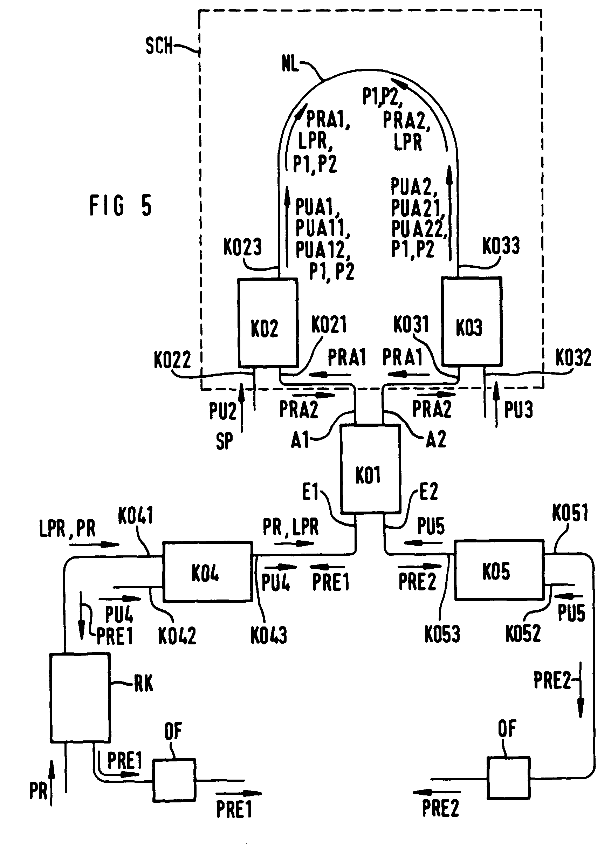

Hier sei nun die in der Figur 5 dargestellte nichtlineare optische Signalverarbeitungseinrichtung mit mindestens einem optischen Pumpsignal PU2, PU3, PU4, PU5 der optischen Pumpsignal-Wellenlänge LPU, und mindestens einem optischen Probensignal PR der optischen Probensignal-Wellenlänge LPR näher erläutert. Die Einrichtung nach Figur 5 weist einen optischen Koppler KO1 mit zwei Eingangstoren E1, E2 und zwei Ausgangstoren A1, A2 auf. In das Eingangstor E1 wird ein optisches Probensignal PR eingespeist. Die optische Schleifenverbindung SCH ist in beiden Richtungen lichtdurchlässig. Sie verbindet die beiden Ausgangstore A1, A2 des Kopplers K1 miteinander. Die Schleifenverbindung SCH beinhaltet ein Medium NL mit mindestens einem nichtlinearen optischen Effekt. Als nichtlinearer Effekt dient beispielsweise der Kerr-Effekt. Er ist beispielsweise präsent in normalen Lichtwellenleitern aus Quarzglas. Die Anordnung der Schleifenverbindung SCH in Figur 5 bewirkt, daß der am Ausgangtor A1 austretende optische

EP 0 595 207 B1

Probensignalanteil PRA1 in das Ausgangstor A2 und der am Ausgangtor A2 austretende Probensignalanteil PRA2 in das Ausgangstor A1 eingespeist werden. Diese Signale werden wiederum durch den Koppler KO1 geleitet, so daß an mindestens einem seiner Eingangstore E1, E2 erste und zweite Anteile PRE1, PRE2 des optischen Probensignals austreten. Die Anordnung weist außerdem mindestens eine Pumpsignaladditionsstelle KO2, KO3, KO4, KO5 auf, durch die mindestens ein optisches Pumpsignal PU2, PU3, PU4, PU5 von einem Eingang KO22, KO32, KO42, KO52 zu einem Ausgang KO23, KO33, KO43, KO53 der betreffenden Pumpsignaladditionsstelle KO2, KO3, KO4, KO5 geführt und so in die optische Schleifenverbindung eingeführt wird, daß der vom ersten zum zweiten Ausgangstor sich ausbreitende erste Probensignalanteil PRA1 durch mindestens einen nicht vernachlässigbaren nichtlinearen optischen Effekt in der optischen Schleifenverbindung SCH, insbesondere im Medium NL, bezüglich mindestens einer der Größen Phase, Polarisation und Amplitude in anderer Weise beeinflußt wird als der sich vom zweiten zum ersten Ausgangstor ausbreitende Probensignalanteil PRA2, so daß die aus mindestens einem der Eingangstore E1, E2 des Kopplers KO1 austretenden Probensignalanteile PRE1, PRE2 in mindestens einer der Größen Phase, Polarisation und Amplitude in Abhängigkeit von mindestens einer der Größen Phase, Polarisation und Amplitude mindestens eines optischen Pumpsignals PU2, PU3, PU4, PU5 einer Beeinflussung unterworfen werden, die vom zeitlichen Verlauf mindestens einer dieser Größen Phase, Polarisation und Amplitude mindestens eines der optischen Pumpsignale PU2, PU3, PU4, PU5 abhängt. Die Funktion der Anordnung beruht darauf, daß die Beeinflussung der in den zwei entgegengesetzten Richtungen laufenden Probensignale durch einen nichtlinearen Effekt, wie z.B. dem Kerr-Effekt, unterschiedlich erfolgt, weil die Pumpsignale sich synchron nur mit einem der beiden Probensignale ausbreiten. In einem wichtigen, aus dem Stand der Technik bereits bekannten Spezialfall werden Anzahl und Orte der Pumpsignaladditionsstellen so gewählt, daß die Pumpsignale oder Anteile davon so in die optische Schleifenverbindung eingeführt werden, daß die Pumpsignale sich durch das Medium NL nur in einer Richtung ausbreiten, was beispielsweise dann gegeben ist, wenn nur eine einzige Pumpsignaladditionsstelle KO2 und ein einziges Pumpsignal PU2 vorgesehen ist. Das Medium NL weist mindestens einen doppelbrechenden polarisationserhaltenden Lichtwellenleiter mit zwei zueinander orthogonalen Hauptpolarisationsmoden P1, P2 auf. Üblicherweise wird der eine austretende, vom optischen Faserschleifenspiegel geschaltete Probensignalanteil PRE2, falls eine Pumpsignaladditionsstelle K5 vorhanden ist, durch diese hindurchgeleitet, und wird anschließend durch ein optisches Filter OF geleitet, das etwaige Anteile des Pumpsignals oder der Pumpsignale abdämpft. Der andere austretende, vom optischen Faserschleifenspiegel nicht geschaltete Probensignalanteil PRE1 kann, falls eine Pumpsignaladditionsstelle K4 vorhanden ist, durch diese hindurchgeleitet und anschließend durch ein optisches Filter OF geleitet werden, das etwaige Anteile des Pumpsignals oder der Pumpsignale abdämpft. Zur Separation von in die Einrichtung eingespeistem Probensignal PR und rücklaufendem, nicht geschaltetem Probensignalanteil PRE1 kann man einen optischen Richtkoppler RK verwenden. Auch die Pumpsignaladditionsstellen KO2, KO3, KO4, KO5 sind vorteilhafterweise als optische Richtkoppler ausgebildet.

Die Ansprüche 21 und folgende betreffen nichtlineare optische Faserschleifenspiegel bzw. (gleichbedeutend) nichtlineare optische Sagnac-Interferometer. In nichtlinearen optischen Faserschleifenspiegeln wird die, eine Manifestation des optischen Kerr-Effekts bildende, Kreuzphasenmodulation eines optischen Probensignals durch ein optisches Pumpsignal ausgenutzt. Bezeichnet man allgemein als PULH diejenige optische Pumpleistung, die für eine Kreuzphasenmodulation um den Phasenwinkel $\pi$ notwendig ist, und als PUL eine optische Pumpleistung, die eine Kreuzphasenmodulation um den Phasenwinkel $\phi$ verursacht, so läßt sich schreiben

$$PUL / PULH = \phi / \pi$$

Andererseits gilt für das Leistungsverhältnis von transmittiertem Probensignalanteil PRE2 zur Summe PRE1+PRE2 aus beiden den nichtlinearen optischen Faserschleifenspiegel verlassenden Probensignalanteilen

$$PRE2 / (PRE1+PRE2) = (1 - cos(\phi))/2$$

Durch Einsetzen ergibt sich

$$PRE2 / (PRE1+PRE2) = (1 - cos(\pi*PUL/PULH))/2$$

Soll dieses Verhältnis möglichst groß sein und soll gleichzeitig die erforderliche Pumpleistung PUL möglichst klein sein, so realisiert man PRE2 = PRE1+PRE2, PRE1 = 0, $\phi = \pi$ durch Wahl von PUL = PULH. PULH ist also diejenige Leistung, die für vollständiges Schalten minimal erforderlich ist. Dafür ist eine Kreuzphasenmodulation um den Phasenwinkel $\pi$ erforderlich.

Die erfindungsgemäßen Anordnungen nach Ansprüchen 21 und folgende haben jeweils den Vorteil, daß eine von der Polarisation des Pumpsignals in jeder Hinsicht, also auch in Bezug auf die zeitliche Lage des Schaltfensters, unabhängige optische nichtlineare Signalverarbeitungseinrichtung realisiert wird. Ein vorteilhafter Einsatz der Erfindung ist besonders in solchen Fällen möglich, in denen ein optisches Pumpsignal, von dessen Polarisation die Funktion des erfindungsgemäßen Einrichtung unabhängig ist, vor dem Erreichen der Einrichtung einen nicht polarisationserhaltenden Lichtwellenleiter durchläuft. Trotz einer unbekannten, sich verändernden und/oder beliebigen Polarisation dieses Pumpsignals beim Erreichen der erfindungsgemäßen Einrichtung wird nämlich die Funktion der erfindungsgemäßen Einrichtung nicht verändert.

In weiterer Ausführungsbeispielen ist lediglich ein Pumpsignal, etwa das zweite Pumpsignal PU2 vorgesehen. Bei einem optischen Signal, aus dem mindestens ein optisches Pumpsignal PU2, PU3, PU4, PU5 gewonnen wird, handelt es sich insbesondere um ein optisches Pumpsignal PU, das durch einen oder mehrere optische Verstärker, durch einen optischen Koppler und/oder durch einen Polarisationsstrahlteiler geleitet wird, wobei an Ausgang bzw. Ausgängen des optischen Verstärkers bzw. der optischen Verstärker, des optischen Kopplers und/oder des Polarisationsstrahlteilers mindestens ein optisches Pumpsignal PU2, PU3, PU4, PU5 zur Verfügung steht.

Steht eine gesamte Pumpleistung der Größe PUL zur Verfügung, so teilt sie sich zu Anteilen a*PUL und (1-a)*PUL auf die beiden zueinander orthogonalen Hauptpolarisationsmoden P1, P2 des Mediums NL auf. Dabei ist a eine relle Zahl zwischen 0 und 1. Wiese das Probensignal PR lediglich Anteile der Hauptpolarisationsmode P1, nicht aber Anteile der dazu orthogonalen Hauptpolarisationsmode P2 auf, so würde für das Verhältnis von transmittiertem Probensignalanteil PRE2 zur Summe PRE1+PRE2 aus beiden den nichtlinearen optischen Faserschleifenspiegel verlassenden Probensignalanteilen gelten

$$\mathrm{PRE2} \,/\, (\mathrm{PRE1+PRE2}) = (1 - \cos(\pi * a * \mathrm{PUL}/\mathrm{PULH}))/2$$

Andererseits, weist das Probensignal PR lediglich Anteile der Hauptpolarisationsmode P2, nicht aber Anteile der Hauptpolarisationsmode P1 auf, so würde gelten

$$\mathrm{PRE2} \,/\, (\mathrm{PRE1+PRE2}) = (1 - \cos(\pi * (1-a) * \mathrm{PUL}/\mathrm{PULH}))/2$$

Im erfindungsgemäßen Fall, daß je etwa die Hälfte der Probensignalleistung den beiden Hauptpolarisationsmoden P1, P2 zuzuordnen ist, ist das auftretende Verhältnis gerade der Mittelwert der beiden letztgenannten Fälle, also

$$\mathrm{PRE2} \,/\, (\mathrm{PRE1+PRE2}) = [(1 - \cos(\pi * a * \mathrm{PUL}/\mathrm{PULH}))/2 +$$

$$(1 - \cos(\pi * (1-a) * \mathrm{PUL}/\mathrm{PULH}))/2] \,/\, 2$$

$$= [1 - \cos(\pi * \mathrm{PUL}/(2 * \mathrm{PULH}))$$

$$* \cos(\pi * (1/2-a) * \mathrm{PUL}/\mathrm{PULH})] \,/\, 2$$

Wählt man PUL = PULH, so vereinfacht sich diese Formel zu

$$\mathrm{PRE2} \,/\, (\mathrm{PRE1+PRE2}) = 1/2$$

so daß der geschaltete Probensignalanteil PRE2 erfindungsgemäß unabhängig von der Polarisation des Pumpsignals ist. Während in den aus Anspruch 1 abgeleiteten Ausführungsbeispielen einer nichtlinearen optischen Signalverarbeitungseinrichtung die Polarisationsabhängigkeit des nichtlinearen Effekts in Form einer Konstante x zu berücksichtigen war, ist in den aus Anspruch 18 abgeleiteten Ausführungsbeispielen einer nichtlinearen optischen Signalverarbeitungseinrichtung die Polarisationsabhängigkeit des nichtlinearen Effekts faktisch so beschaffen, daß die Konstante x gleich Null zu setzen ist, d.h. eine orthogonale Polarisation wird überhaupt nicht beeinflußt. Dieses Verhalten der Einrichtung ist auf die zeitlichräumliche Trennung von verschieden polarisierten Signalen durch die polarisationsabhängigen Ausbreitungsgeschwindigkeiten im polarisationerhaltenden, doppelbrechenden Lichtwellenleiter zurückzuführen.

In einer Klasse von vorteilhaften Ausführungsbeispielen der Erfindung breiten sich Pumpsignale im Medium NL überwiegend oder ausschließlich in einer Richtung aus. Das ist einfach dadurch zu erzielen, daß beispielsweise nur an der Pumpsignaladditionsstelle K2 oder nur an der Pumpsignaladditionsstelle K3 ein Pumpsignal PU2 bzw. PU3 eingekoppelt wird. Ein anderer solcher Fall wird erzielt, wenn beispielsweise nur über die Pumpsignaladditionsstelle K4 oder nur über die Pumpsignaladditionsstelle K5 ein Pumpsignal PU4 bzw. PU5 eingekoppelt wird und der Koppler K1 Eingangssignale an den Eingängen E1, E2 nicht zu gleichen Teilen auf die beiden Ausgänge A1, A2 aufteilt. Eine vorteilhafte Ausführung des zuletzt erwähnten Falles verwendet einen Koppler K1, der für die Wellenlänge des optischen Pumpsignals ein stark asymmetrisches Koppelverhältnis aufweist, für die Wellenlänge des Probensignals jedoch ein näherungsweise symmetrisches.

In einem Ausführungsbeispiel ist die Einrichtung so ausgebildet, daß ein Pumpsignal PU2 in die Pumpsignaladditionsstelle K2 eingespeist wird, daß ein durch den Pumpsignalanteil PU2 erzeugter erster Pumpsignalanteil PUA11 eine erste dieser Hauptpolarisationsmoden P1 aufweist und daß ein durch den Pumpsignalanteil PU2 erzeugter zweiter Pumpsignalanteil PUA12 die zweite dieser Hauptpolarisationsmoden P2 aufweist. Da die Polarisation des Pumpsignalanteils PU2 erfindungsgemäß beliebig sein darf, ist konsequenterweise die Summe der Leistungen des ersten Pumpsignalanteils PUA11, welche sich in der Form a*PUL ausdrücken läßt, und des zweiten Pumpsignalanteils PUA12, welche sich in der Form (1-a)*PUL ausdrücken läßt, konstant, wobei aber in Abhängigkeit von der Polarisation des Pumpsignals PU2 jeweils einer dieser Pumpsignalanteile PUA11, PUA12 verschwinden kann.

In einem weiteren vorteilhaften Ausführungsbeispiel der Erfindung treten mindestens in Teilen eines doppelbrechenden polarisationserhaltenden Lichtwellenleiters des Mediums NL mindestens zwei optische Pumpsignalanteile PUA11, PUA12, PUA21, PUA22 auf. Mindestens zwei dieser Pumpsignalanteile PUA11, PUA12, PUA21, PUA22 weisen zueinander orthogonale Polarisationen, die gleich den Hauptpolarisationsmoden P1, P2 dieses doppelbrechenden polarisationserhaltenden Lichtwellenleiters sind, auf. Mindestens zwei Pumpsignalanteile PUA11, PUA12, PUA21, PUA22, die solche zueinander orthogonalen Hauptpolarisationsmoden P1, P2 besitzen, breiten sich im Medium NL in entgegengesetzten Richtungen aus.

In Einschränkung der in diesem Ausführungsbeispiel vorhandenen Gestaltungsfreiheiten kann die Einrichtung beispielsweise so ausgebildet sein, daß ein Pumpsignal PU2 in die Pumpsignaladditionsstelle KO2 eingespeist wird, daß ein durch das Pumpsignal PU2 erzeugter Pumpsignalanteil PUA11 eine erste dieser Hauptpolarisationsmoden P1 aufweist, daß demzufolge kein zweiter durch das Pumpsignal PU2 erzeugter Pumpsignalanteil PUA12 mit der zweiten dieser Hauptpolarisationsmoden P2 auftritt. Ein Pumpsignal PU3 wird in die Pumpsignaladditionsstelle KO3 eingespeist wird, so daß ein durch das Pumpsignal PU3 erzeugter Pumpsignalanteil PUA22 die zweite dieser Hauptpolarisationsmoden P2 aufweist und so daß kein zweiter durch das Pumpsignal PU3 erzeugter Pumpsignalanteil PUA21 mit der ersten dieser Hauptpolarisationsmoden P1 auftritt.

Da die angeführten mathematischen Formeln Gültigkeit besitzen für die eine Manifestation des optischen Kerr-Effekts bildende Kreuzphasenmodulation, sind vorteilhafte Ausführungsbeispiele der Erfindung insbesondere so ausgebildet, daß der optische Kerr-Effekt als nichtlinearer Effekt dient und die Beeinflussung der Probensignale PR oder ihrer Anteile PRK, PRA, PRA1, PRA2 zumindest bezüglich der Phase dieser Probensignale oder ihrer Anteile auftritt.

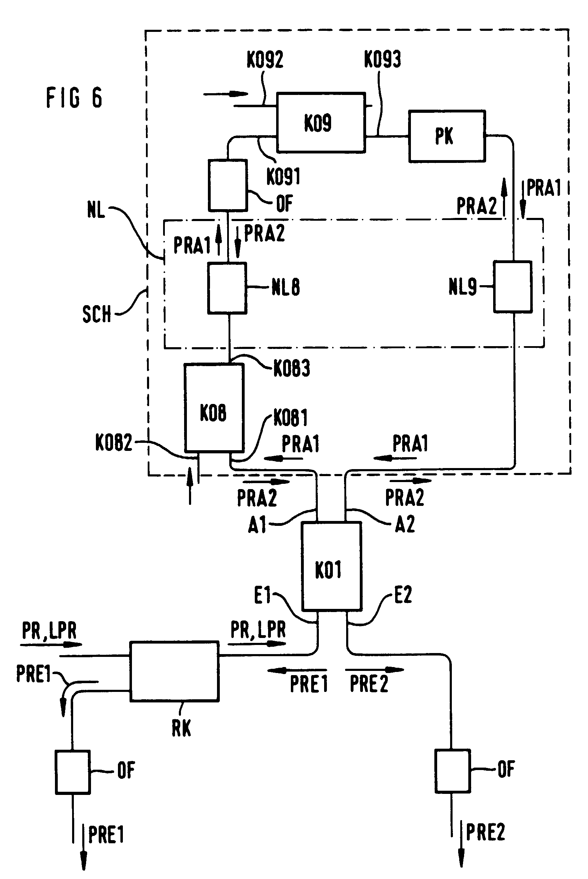

Das in der Figur 6 dargestellte Ausführungsbeispiel weist einen optischen Koppler KO1 mit zwei Eingangstoren E1, E2 und zwei Ausgangstoren A1, A2 auf. In das Eingangstor E1 wird ein optisches Probensignal PR eingespeist. Die optische Schleifenverbindung SCH ist in beiden Richtungen lichtdurchlässig. Sie verbindet die beiden Ausgangstore A1, A2 des Kopplers K1 miteinander. Die Schleifenverbindung SCH beinhaltet einen Medium NL mit mindestens einem nichtlinearen optischen Effekt. Als nichtlinearer Effekt dient beispielsweise der Kerr-Effekt. Er ist beispielsweise präsent in normalen Lichtwellenleitern aus Quarzglas. Die Anordnung der Schleifenverbindung SCH in Figur 6 bewirkt, daß der am Ausgangtor A1 austretende optische Probensignalanteil PRA1 in das Ausgangstor A2 und der am Ausgangtor A2 austretende Probensignalanteil PRA2 in das Ausgangstor A1 eingespeist werden. Diese Signale werden wiederum durch den Koppler KO1 geleitet, so daß an mindestens einem seiner Eingangstore E1, E2 Anteile PRE1, PRE2 des optischen Probensignals austreten. Das Pumpsignal PU weist zwei Pumpsignalkomponenten PUA6, PUA7 mit zueinander orthogonalen Polarisationen P6, P7 auf und/oder aus dem Pumpsignal PU werden zwei Pumpsignalkomponenten PUA6, PUA7 mit zueinander orthogonalen Polarisationen P6, P7 abgeleitet. Je nach Ausführungsbeispiel werden das Pumpsignal PU und/oder die Pumpsignalkomponenten PUA6, PUA7 in bestimmter Weise in die Schleifenverbindung SCH eingespeist. Die Einrichtung weist mindestens eine Pumpsignaladditionsstelle KO8, KO9 auf, in welcher oder welchen mindestens ein Pumpsignal PU der Pumpsignal-Wellenlänge LPU und/oder mindestens eine dieser Pumpsignalkomponenten PUA6, PUA7 von einem Eingang KO82, KO92 zu einem Ausgang KO83, KO93 der betreffenden Pumpsignaladditionsstelle KO8, KO9 geführt und in die optische Schleifenverbindung SCH eingeführt wird. Ein sich vom ersten Ausgangstor A1 zum zweiten Ausgangstor A2 des Kopplers KO1 sich ausbreitender Probensignalanteil PRA1 wird durch mindestens einen nicht vernachlässigbaren nichtlinearen optischen Effekt in der optischen Schleifenverbindung SCH, insbesondere im nichtlinearen Medium NL, bezüglich mindestens einer der Größen Phase, Polarisation und Amplitude in anderer Weise beeinflußt als ein sich vom zweiten zum ersten Ausgangstor ausbreitende Probensignalanteil PRA2, so daß die aus mindestens einem der Eingangstore E1, E2 des Kopplers KO1 austretenden Probensignalanteile PRE1, PRE2 in mindestens einer der Großen Phase, Polarisation, Amplitude und Leistung in Abhängigkeit von mindestens einer der Größen Phase, Polarisation, Amplitude und Leistung mindestens eines optischen Pumpsignals PU und/oder mindestens einer dieser Pumpsignalkomponenten PUA6, PUA7 einer Beeinflussung unterworfen werden, die vom zeitlichen Verlauf mindestens eines optischen Pumpsignals PU und/oder mindestens einer dieser Pumpsignalkomponenten PUA6, PUA7 abhängt. Diese zwei Pumpsignalkomponenten PUA6, PUA7 werden in das Medium NL in mit der Ausbreitungsrichtung eines ersten Probensignalanteils PRA1 identischen Ausbreitungsrichtungen eingespeist. Die Funktion der Anordnung beruht darauf, daß die Beeinflussung der in den zwei entgegengesetzten Richtungen laufenden Probensignale durch einen nichtlinearen Effekt, wie z.B. dem Kerr-Effekt, unterschiedlich erfolgt, weil die Pumpsignale PU und/oder Pumpsignalkomponenten PUA6, PUA7 sich synchron nur mit einem der beiden Probensignale PRA1, PRA2 ausbreiten. Zur Separation von in die Einrichtung eingespeistem Probensignal PR und rücklaufendem, nicht geschaltetem Probensignalanteil PRE1 kann man einen optischen Richtkoppler RK verwenden. Auch die Pumpsignaladditionsstellen KO8, KO9 sind vorteilhafterweise als optische Richtkoppler ausgebildet.

Üblicherweise wird der eine austretende, vom optischen Faserschleifenspiegel geschaltete Probensignalanteil PRE2 durch ein optisches Filter OF geleitet, das etwaige Anteile des Pumpsignals oder der Pumpsignalanteile abdämpft. Auch der andere austretende, vom optischen Faserschleifenspiegel nicht geschaltete Probensignalanteil PRE1 kann durch ein optisches Filter OF geleitet werden, das etwaige Anteile des Pumpsignals oder der Pumpsignale abdämpft.

Die Aufgabe, die genannte Beeinflussung des Probensignals PR durch das Pumpsignal PU von der Polarisation dieses Pumpsignals PU unabhängig zu machen kann, dadurch gelöst werden, daß das Medium NL mindestens zwei Teile NL8, NL9 aufweist.

Ein erster dieser Teile NL8 weist zumindest bei Auftreten einer ersten Polarisation P1 dieses ersten Probensignalanteils PRA1 in dieser ersten Polarisation P1 die erste Pumpsignalkomponente PUA6 auf, aber weist in dieser ersten Polarisation P1 im wesentlichen keine zweite Pumpsignalkomponente PUA7 auf. Ein zweiter dieser Teile NL9 weist zumindest bei Auftreten einer ersten Polarisation P1 dieses ersten Probensignalanteils PRA1 in dieser ersten Polarisation P1 die zweite Pumpsignalkomponente PUA7 auf, aber weist in dieser ersten Polarisation P1 im wesentlichen keine erste Pumpsignalkomponente PUA6 auf.

Eine erste Pumpsignaladditionsstelle KO8, ein erster dieser Teile NL8 des Mediums NL und ein zweiter dieser Teile NL9 des Mediums NL sind in Ausbreitungsrichtung des ersten Probensignalanteils PRA1 hintereinander angeordnet. Da doppelbrechende, polarisationsabhängige Lichtwellenleiter eine eingestrahlte Polarisation eines Lichtsignals i.a. nur dann erhalten, wenn diese eingestrahlte Polarisation gleich einer Hauptpolarisationsmode dieses doppelbrechenden, polarisationserhaltenden Lichtwellenleiters ist, werden bei Verwendung doppelbrechender, polarisationserhaltender Lichtwellenleiter in Medium NL und/oder Teilen NL8, NL9 des Mediums NL die Polarisationen dieser Pumpsignalkomponenten PUA6, PUA7 in Medium NL und/oder Teilen NL8, NL9 des Mediums NL gleich Hauptpolarisationsmoden dieser doppelbrechenden, polarisationserhaltenden Lichtwellenleitern gewählt. Aufgrund der o.g. Gleichheit von Polarisationen von Pumpsignalanteilen PUA6, PUA7 mit einer ersten Polarisation P1 ist bei Verwendung doppelbrechender, polarisationserhaltender Lichtwellenleiter in Medium NL und/oder Teilen NL8, NL9 des Mediums NL diese erste Polarisation P1 ebenfalls gleich mindestens einer Hauptpolarisationsmode des Mediums NL und/oder von Teilen NL8, NL9 des Mediums NL.

Die Unabhängigkeit der Funktion der Einrichtung von der Polarisation des Pumpsignals beruht darauf, daß die beiden Pumpsignalkomponenten PUA6, PUA7, aus denen sich das Pumpsignal PU beispielsweise zusammensetzt, den Probensignalanteil PRA1 getrennt beeinflussen können. Beispielsweise bewirkt bei Gleichheit der Polarisationen von Pumpsignalkomponente PUA6 und Probensignalanteil PRA1 die Pumpsignalkomponente PUA6 im ersten Teil NL8 des Mediums NL eine nichtlineare Phasenverschiebung des Pumpsignalanteils PRA1 um den Phasenwinkel $\pi$ *a*PUL/PULH, wobei die weiter oben eingeführte Bedeutung der mathematischen Formelzeichen vorausgesetzt wird und die reelle Zahl a natürlich wiederum vom Polarisationszustand des Pumpsignals PU abhängt. In diesem Fall bewirkt die Pumpsignalkomponente PUA7 im zweiten Teil NL9 des Mediums NL eine nichtlineare Phasenverschiebung des Pumpsignalanteils PRA1 um den Phasenwinkel $\pi$*(1-a)*PUL/PULH. Die beiden Pumpsignalkomponenten zusammen bewirken also eine nichtlineare Phasenverschiebung des Pumpsignalanteils PRA1 um den Phasenwinkel $\pi$*PUL/PULH. Dieser Phasenwinkel ist unabhängig von der polarisationsbedingten Größe a, ist also polarisationsunabhängig.

Falls die Laufzeitendifferenzen zwischen Pumpsignalanteilen PUA6 und Pumpsignalanteilen PUA7 sowie zwischen Probensignalen PRA1 aller möglichen Polarisationen, insbesondere der zwei Hauptpolarisationsmoden, in jedem der Teile NL8, NL9 gering, näherungsweise gleich Null sind, polarisationserhaltende Lichtwellenleiter im Medium NL und seinen Teilen NL8, NL9 verwendet werden und die Pumpsignalanteile PUA6, PUA7 jeweils in den zwei Teilen NL8, NL9 der Einrichtung auftreten, so tritt zur gerade beschriebenen Beeinflussung eines Probensignalanteils PRA1, der im Teil NL8 des Mediums NL dieselbe Polarisation wie der Pumpsignalanteil PUA6 aufweist, um Phasenwinkel $\pi$*a*PUL/PULH und $\pi$*(1-a)*PUL/PULH, also insgesamt $\pi$ *PUL/PULH auch eine Beeinflussung eines Probensignalanteils PRA1, der im Teil NL8 des Mediums NL eine zur Polarisation des Pumpsignalanteils PUA6 orthogonale Polarisation aufweist, um Phasenwinkel $\pi$*(1-a)*PUL/PULH durch den Pumpsignalanteil PUA7 im ersten Teil NL8 des Mediums NL und $\pi$*a*PUL/PULH durch den Pumpsignalanteil PUA6 im zweiten Teil NL9 des Mediums NL, also insgesamt wiederum $\pi$*PUL/PULH. Da nun Probensignalanteile PRA1 zweier zueinander orthogonaler Polarisationen jeweils Phasenverschiebungen um dieselben Phasenwinkel $\pi$*PUL/PULH erfahren, ist die Funktion der Einrichtung unabhängig nicht nur von der Polarisation des Pumpsignals PU, sondern auch von der Polarisation des Probensignals PR.

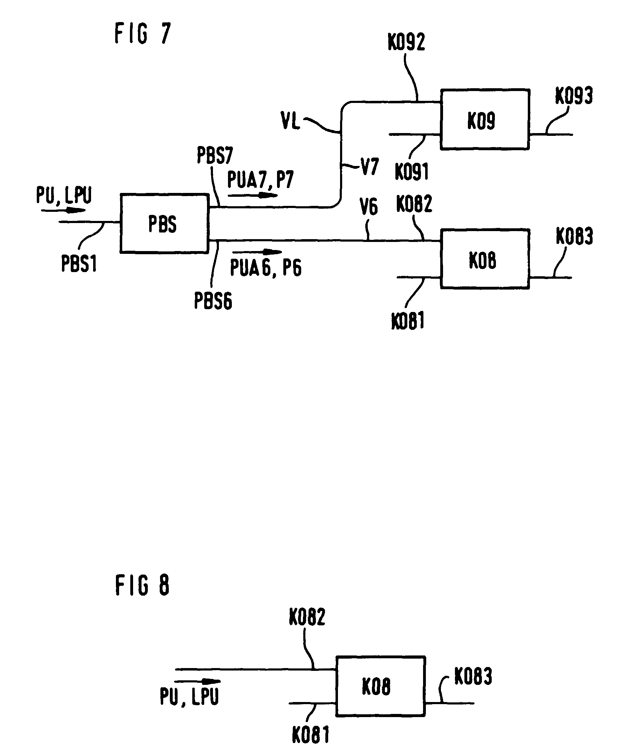

Die zunächst folgende Beschreibung bezieht sich auf Teile der Figur 6 und auf Figur 7. In Figur 7 sind als Detail der Figur 6 die Pumpsignaladditionsstellen KO8 und KO9 mit ihren Ein- und Ausgängen KO81, KO82, KO83, KO91, KO92, KO93 herausgezeichnet. Die Verbindung zwischen dem Ausgang KO83 und dem Eingang KO91 durch die in Figur 6 gezeichneten NL8, OF ist in dem in Figur 7 dargestellten Ausschnitt aus Figur 6 der Übersichtlichkeit halber nicht dargestellt. Zur Versorgung der Teile NL8, NL9 des nichtlinearen Mediums NL durch Pumpsignale ist entsprechend Figur 6 zusätzlich zur ersten Pumpsignaladditionsstelle KO8 eine zweite Pumpsignaladditionsstelle KO9 zwischen dem ersten Teil NL8 und dem zweiten Teil NL9 des Mediums NL angeordnet. Zur Versorgung beider Pumpsignaladditionsstellen KO8, KO8 mit den Pumpsignalkomponenten PUA6, PUA7 weist die Einrichtung entsprechend Figur 7 einen Polarisationsstrahlteiler PBS auf. Das Pumpsignal PU der Pumpsignalwellenlänge LPU wird in den Polarisationsstrahlteiler PBS über einen Eingang PBS1 eingespeist.

Der Ausgang PBS6 des Polarisationsstrahlteilers PBS leitet einen Pumpsignalanteil PUA6 mit einer ersten Polarisation P6 über eine erste Verbindungsleitung V6 zu einem Eingang KO82 der ersten Pumpsignaladditionsstelle KO8.

Ein Ausgang PBS7 des Polarisationsstrahlteilers PBS leitet einen Pumpsignalanteil PUA7 mit der zur ersten Polarisation P6 orthogonalen zweiten Polarisation P7 über eine zweite Verbindungsleitung V7 zu einem Eingang KO92 der ersten Pumpsignaladditionsstelle KO9. Die Orthogonalität der an den Ausgängen PBS6, PBS7 auftretenden Polarisationen P6, P7 zueinander ist dabei eine Eigenschaft aller Polarisationsstrahlteiler.

Zur Aufrechterhaltung orthogonaler Polarisationen auch an den Eingängen KO82 und KO92 müssen die Verbindungsleitungen V6, V7 ein geeignetes Polarisationsübertragungsverhalten aufweisen. Vorteilhaft sind sie stark doppelbrechend, wodurch sie als polarisationserhaltende Verbindungsleitungen wirken.

Zweckmäßig ist es auch, mindestens eine dieser Verbindungsleitungen V6, V7 so kurz wie möglich, am besten mit der Länge Null zu gestalten.

Die im kennzeichnenden Teil des Anspruchs 21 formulierte Bedingung, daß bei Gleichheit einer Polarisation P1 des Probensignalanteils PRA1 mit der Polarisation der Pumpsignalkomponente PUA6 im ersten Teil NL8 des Mediums NL auch Gleichheit zwischen der Polarisation des selben Probensignalanteils PRA1 mit der Polarisation der Pumpsignalkomponente PUA7 im zweiten Teil NL9 des Mediums NL besteht, bedeutet, daß die Verbindungsleitungen V6, V7 vom Ausgang PBS6 des Polarisationsstrahlteilers PBS zum Eingang KO82 der ersten Pumpsignaladditionsstelle KO8 und vom Ausgang PBS7 des Polarisationsstrahlteilers PBS zum Eingang KO92 der zweiten Pumpsignaladditionsstelle KO9 ein geeignetes Polarisationsübertragungsverhalten aufweisen müssen. In einem typischen Anwendungsfall sind der Koppler KO1, die gesamte Schleifenverbindung SCH, der Polarisationsstrahlteiler PBS und die verschiedenen Verbindungsleitungen polarisationserhaltend, etwa in Form von doppelbrechenden, polarisationserhaltenden Lichtwellenleitern ausgelegt. Um die Bedingung zu erfüllen, ist ein polarisationserhaltender Lichtwellenleiter entweder in der Verbindung V6 oder der Verbindung V7 um 90° verdreht, während in der jeweils anderen Verbindung ein polarisationserhaltender Lichtwellenleiter nicht verdreht ist.

In einer weiteren Variante der Einrichtung nach Figur 6 wird entsprechend Figur 7 die der zweiten Pumpsignaladditionsstelle KO9 zugeführte Pumpsignalkomponente PUA7 gegenüber der der ersten Pumpsignaladditionsstelle KO8 zugeführten Pumpsignalkomponente PUA6 in einer Verzögerungsleitung VL wenigstens näherungsweise um diejenige Zeit verzögert, um die ein erster Probensignalanteil PRA1 zwischen der ersten Pumpsignaladditionsstelle KO8 und der zweiten Pumpsignaladditionsstelle KO9 verzögert wird. Der besondere Vorteil dieses Ausführungsbeispiels besteht darin, daß bei vom Wert Null verschiedenen Stärken beider zu einem bestimmten Zeitpunkt aus einem Pumpsignal PU abgeleiteten Pumpsignalkomponenten PUA6, PUA7 diese beiden Pumpsignalkomponenten PUA6, PUA7 jeweils dieselben zeitlichen Anteile eines ersten Probensignalanteils PRA1 beeinflussen und keine unerwünschte Kopplung zwischen Polarisation des Pumpsignals PU und dem zeitlichen Verlauf des Schalt- oder Übertragungsverhaltens der Einrichtung für Probensignale PR auftreten kann.

Bei Zuführung von Pumpsignalanteilen PUA7 nur in den zweiten Teil NL9 des Mediums NL ist zwar erfindungsgemäß sichergestellt, daß im ersten Teil NL8 des Mediums NL keine Pumpsignalanteile PUA7 auftreten. Bei Zuführung von Pumpsignalanteilen PUA6 in den ersten Teil NL8 des Mediums sind diese aber i.a. bei Erreichen der zweiten Pumpsignaladditionsstelle KO9 und des zweiten Teils NL9 des Mediums NL noch nicht ausreichend abgeklungen, um nicht auch im zweiten Teil NL9 des Mediums NL aufzutreten. Eine Maßnahme dagegen besteht entsprechend Figur 6 darin, daß zwischen dem ersten Teil NL8 des Mediums NL und der zweiten Pumpsignaladditionsstelle KO9 ein optisches Filter OF in die optische Schleifenverbindung SCH eingefügt ist, welches die erste Pumpsignalkomponente PUA6 dämpft, so daß der zweite dieser Teile NL9 des Mediums NL im wesentlichen keine erste Pumpsignalkomponente PUA6 aufweist. Wie die übrigen in dieser Patentanmeldung beschriebenen optischen Filter OF besitzt auch dieses optische Filter OF die Eigenschaft, daß es Signale der Pumpsignal-Wellenlänge LPU stärker dämpft und/oder weniger verstärkt als Signale der Probensignal-Wellenlänge LPR.

Figur 8 zeigt wiederum ein Detail von Figur 6, bei dem beide zueinander orthogonal polarisierten Pumpsignalkomponenten PUA6, PUA7 in die erste Pumpsignaladditionsstelle KO8 eingespeist an einem zweiten Eingang KO82 und zu einem Ausgang KO83 übertragen werden. In diesem Fall weist das Medium NL und/oder die beiden Teile NL8, NL9 des Mediums NL doppelbrechende polarisationserhaltende Lichtwellenleiter mit zwei zueinander orthogonalen Hauptpolarisationsmoden P1, P2 auf. Das diese zwei Pumpsignalkomponenten PUA6, PUA7 aufweisendes Pumpsignal PU wird, wie in Figur 8 erkenntlich, zum Eingang KO82 der ersten Pumpsignaladditionsstelle KO8 geleitet. Im doppelbrechenden, polarisationserhaltenden Lichtwellenleiter des Mediums NL und/oder seiner Teile NL8, NL9 kommt es aufgrund der verschiedenen Ausbreitungsgeschwindigkeiten zu einer zeitlichen Separation von optischen Signalen verschiedener Polarisationen, insbesondere der zueinander orthogonal polarisierten Pumpsignalanteile PUA6, PUA7. Auf diese Weise kann ein Pumpsignalanteil PUA6, PUA7 nicht denjenigen Probensignalanteil beeinflussen, der vom jeweils anderen Pumpsignalanteil PUA7, PUA6 beeinflußt wird. Deswegen ist die erfindungsgemäße Unabhängigkeit der Funktion der Einrichtung von der Polarisation des Pumpsignals sichergestellt, sofern man eine Probensignalkomponente, die eine Polarisation, die gleich einer Hauptpolarisationsmode des Mediums NL und/oder von Teilen NL8, NL9 des Mediums NL ist, aufweist, in einem ersten Teil NL8 des Mediums NL von einer Pumpsignalkomponente gleicher Polarisation, und in einem zweiten Teil NL9 des Mediums NL von der jeweils anderen Pumpsignalkomponente, aber ebenfalls mit gleicher Polarisation, beeinflussen läßt. Zu diesem Zweck ist zwischen den beiden Teilen NL8, NL9 des Mediums NL ein wellenlängenabhängiger Polarisationskonverter PK eingefügt, welcher bei eingangsseitigem Auftreten von einer diese Hauptpolarisationsmoden P1, P2 aufweisenden Pumpsignalkomponenten der Pumpsignal-Wellenlänge LPU und von dieselbe Hauptpolarisationsmode P1, P2 aufweisenden ersten Probensignalanteilen PRA1 der Probensignalwellenlänge LPR ausgangseitig Pumpsignalkomponenten der einen Hauptpolarisationsmode P1 und erste Probensignalanteile PRA1 der dazu orthogonalen Hauptpolarisationsmode P2 erzeugt.

Wenn in einen doppelbrechenden, polarisationserhaltenden Lichtwellenleiter ein optisches Signal eingestrahlt wird, dessen Polarisation nicht gleich einer Hauptpolarisationsmode dieses doppelbrechenden, polarisationserhaltenden Lichtwellenleiters ist, so kommt es wegen der unterschiedlichen Ausbreitungsgeschwindigkeiten der beiden jeweils einer dieser Hauptpolarisationsmoden zuzuordnenden Anteile dieses optischen Signals zu einer Schwebung zwischen diesen Anteilen. Nach einer Ausbreitungsstrecke im Lichtwellenleiter, auf der der Phasenunterschied zwischen diesen beiden Anteilen gerade $2\pi$ beträgt und welche man Schwebungslänge nennt, ist die Polarisation dieses Signals gerade wieder gleich der eingestrahlten Polarisation. Da die Ausbreitungsgeschwindigkeiten im Lichtwellenleiter in erster Näherung wellenlängenunabhängig sind, ist die Schwebungslänge wenigstens in einem kleinen Bereich wenigstens näherungsweise proportional zur optischen Wellenlänge. Wegen der unterschiedlichen Wellenlängen von Proben- und Pumpsignalen weist ein doppelbrechender, polarisationserhaltender Lichtwellenleiter in Abhängigkeit von seiner Länge, seiner Doppelbrechung, und in Abhängigkeit von den optischen Wellenlängen LPU, LPR von Pump- und Probensignalen verschiedene, in weiten Grenzen frei wählbare Anzahlen von Schwebungslängen für Pump- und Probensignale auf. Deshalb eignet sich ein solcher doppelbrechender, polarisationserhaltender Lichtwellenleiter zur Realisation eines wellenlängenabhängigen Polarisationskonverters. Ein wellenlängenabhängiger Polarisationskonverter PK weist vorteilhaft einen solchen doppelbrechenden polarisationserhaltenden Lichtwellenleiter auf, dessen Hauptpolarisationsmoden mit den Hauptpolarisationsmoden P1, P2 beider Teile NL8, NL9 des Mediums NL jeweils Winkel von $\pm 45°$ einschließen und der für Signale der Pumpsignal-Wellenlänge LPU eine erste ganze Zahl von halben Schwebungslängen und für Signale der Probensignal-Wellenlänge LPR eine zweite ganze, insbesondere gerade Zahl, von halben Schwebungslängen, die sich von der ersten ganzen Zahl um 1 oder - 1 unterscheidet, aufweist.

In einem anderen Ausführungsbeispiel weist der wellenlängenabhängige Polarisationskonverter PK einen abstimmbaren Modenkonverter auf. Abstimmbare Modenkonverter sind beispielsweise auf den Seiten 572 bis 574 von Electronics Letters, Band 23, No. 11, 21. Mai 1987 beschrieben. Neben einer Ausführung im Material Lithiumniobat kommt insbesondere auch eine Ausführung im Material Indiumphosphid oder in einem Polymermaterial in Frage.

Wie bereits erwähnt, kommt es bei Verwendung von doppelbrechenden, polarisationserhaltenden Lichtwellenleitern in Medium NL und/oder seinen Teilen NL8, NL9 aufgrund der verschiedenen Ausbreitungsgeschwindigkeiten zu einer zeitlichen Separation von optischen Signalen verschiedener Polarisationen. Wie bereits erwähnt, ist zumindest in manchen Fällen diese zeitliche Separation durchaus erwünscht. Um jedoch bei Aufrechterhaltung der zeitlichen Separation trotzdem eine von der Polarisation eines eingestrahlten Signals wenigstens näherungsweise unabhängige Laufzeit dieses Signals durch einen doppelbrechenden, polarisationsabhängigen Lichtwellenleiter zu ermöglichen, kann man, das Medium NL und/oder die Teile NL8, NL9 des Mediums NL jeweils aus mindestens zwei doppelbrechenden, polarisationserhaltenden Lichtwellenleiterstücken S1, S2, S3, S4, ... zusammensetzen, wobei doppelbrechende, polarisationserhaltende Lichtwellenleiterstücke S1, S3, ... mit positiver sowie doppelbrechende, polarisationserhaltende Lichtwellenleiterstücke S2, S4, ... mit negativer Laufzeitdifferenz zwischen Lichtsignalen der einen erhaltenen Polarisation gegenüber Lichtsignalen der anderen erhaltenen Polarisation aneinandergefügt sind, so daß die Laufzeitdifferenz zwischen Lichtsignalen der einen erhaltenen Polarisation gegenüber Lichtsignalen der anderen erhaltenen Polarisation bei Lichtsignalausbreitung durch das gesamte Medium NL geringer ist als die Laufzeitdifferenz für Lichtsignale der einen erhaltenen Polarisation gegenüber solchen der anderen erhaltenen Polarisation in mindestens einem der Lichtwellenleiterstücke S1, S2, S3, S4 ... . Definitionsgemäß besteht kein Unterschied zwischen den Begriffen 'erhaltene Polarisation und 'Hauptpolarisationsmode' eines doppelbrechenden polarisationserhaltenden Lichtwellenleiters. Wie bereits erwähnt, weisen die gebräuchlichsten doppelbrechenden, polarisationserhaltenden Lichtwellenleiter linear polarisierte Hauptpolarisationsmoden auf.

In einem einfachen, gebräuchlichen Fall sind zwei etwa gleich lange Stücke S1, S2 eines polarisationserhaltenden Lichtwellenleiters aneinandergefügt. An der Verbindungsstelle sind die Stücke S1, S2 um 90° gegeneinander verdreht, damit die Hauptpolarisationsmoden, also die erhaltenen Polarisationen, gegeneinander vertauscht werden, so daß das Vorzeichen der Laufzeitdifferenz zwischen beiden Hauptpolarisationsmoden, d.h. den erhaltenen Polarisationen, vertauscht wird.

Wie bereits erwähnt, gilt für das Leistungsverhältnis von transmittiertem Probensignalanteil PRE2 zur Summe PRE1+PRE2 aus beiden den nichtlinearen optischen Faserschleifenspiegel verlassenden Probensignalanteilen

$$PRE2 / (PRE1+PRE2) = (1 - \cos(\phi))/2$$

wobei der Phasenwinkel $\phi$ die nichtlineare Phasenverschiebung ist. In den meisten Anwendungsfällen wählt man den niedrigsten Phasenwinkel, der komplettes Schalten ermöglicht, also $\phi = \pi$. Dadurch ist der Leistungsbedarf für Pumrsignale relativ klein, was vorteilhaft ist. Natürlich ist komplettes Schalten auch für andere ungeradzahlige Vielfache von $\phi = \pi$ als Phasenwinkel möglich. Wegen der Polarisationsabhängigkeit der Kreuzphasenmodulation um den Faktor $x = 3$ bietet es sich an, Probensignale, die dieselbe Polarisation wie ein Pumpsignal aufweisen, um den Phasenwinkel $\phi = 3\pi$, und Probensignale, die eine zur Polarisation eines Pumpsignals orthogonale Polarisation aufweisen, um den Phasenwinkel $\phi = \pi$ beeinflussen zu lassen. Werden also bei, dieselbe Polarisation P8 wie die erste Pumpsignalkomponente PRA6 aufweisenden ersten Probensignalanteilen PRA1 diese ersten Probensignalanteile PRA1 in der optischen Schleifenverbindung SCH bezüglich ihrer Phase um mindestens näherungsweise einen Phasenwinkel der Größe $3\pi$ stärker beeinflußt als die zweiten Probensignalanteile PRA2, dann werden bei zur Polarisation P8) der ersten Pumpsignalkomponente PRA6 orthogonale Polarisation aufweisenden ersten Probensignalanteilen PRA1 diese ersten Probensignalanteile PRA1 in der optischen Schleifenverbindung SCH bezüglich ihrer Phase um mindestens näherungsweise einen Phasenwinkel der Größe $\pi$ stärker beeinflußt als die zweiten Probensignalanteile PRA2. Dadurch ist die Beeinflussung der Leistung von austretenden Probensignalanteilen PRE1, PRE2 durch ein optisches Pumpsignal PU und/oder mindestens eine Pumpsignalkomponente PUA6, PUA7 von der Polarisation eines optischen Probensignals PR unabhängig.

Zur Selektion des gewünschten Nutzsignals ist es vorteilhaft und zweckmäßig, wenn mindestens ein die Einrichtung verlassendes Probensignal oder ein Probensignalanteil PR, PRK, PRA, PRE1, PRE2 durch mindestens ein optisches Filter OF geleitet wird, welches Signale der Pumpsignal-Wellenlänge LPU dämpft, so daß dieses die Einrichtung verlassende Signal im wesentlichen keine Pumpsignale PU, PU2, PU3, PU4, PU5, PU6 oder Pumpsignalkomponenten PUA6, PUA7 aufweist.

Wie bereits erwähnt, ist in den meisten Medien der bereits beschriebene optische Kerreffekt der stärkste nichtlineare Effekt. Ausführungen der Erfindung sind aber nicht auf die Verwendung des Kerr-Effekts als nichtlinearer optischer Effekt beschränkt. Vielmehr können auch andere nichtlineare optische Effekte eingesetzt werden. Dazu zählt die erwähnte nichtlineare Gewinnsättigung in manchen Materialien, z.B. in optisch verstärkenden Elementen wie Laserverstärkern und insbesondere Halbleiter-Laserverstärkern. Die nichtlineare Gewinnsättigung in Halbleiter-Laserverstärkern etwa hat gegenüber dem Kerr-Effekt in Quarzglas den Vorteil, daß sie schon mit weit geringeren Leistungen und weit geringeren optischen Weglängen auskommt. In diesen Anwendungen wird das verstärkende Element gepumpt, z.B. durch Strominjektion in einen Halbleiter-Laserverstärker, so daß es verstärkt. Die Gewinnsättigung führt dazu, daß ein Signal in Anwesenheit eines genügend starken, zweiten Signals unterschiedlicher Wellenlänge und/oder Polarisation weniger verstärkt wird als bei Abwesenheit des zweiten Signals.

Auch sättigbare Absorber, wie z.B. Halbleiter-Laserverstärker, die nicht elektrisch gepumpt werden, bilden einen nichtlinearen optischen Effekt, der sich erfindungsgemäß in der Einrichtung verwenden läßt. Während optische Signale oder optische Signalgemische niedriger Gesamtleistung von einem solchen Absorber absorbiert werden, werden Signale oder Signalgemische hoher Gesamtleistung weitgehend transmittiert, weil ihre hohe Leistungsdichte eine weitgehend komplette Inversion des Materials verursacht, so daß sich die meisten Ladungsträger im angeregten Zustand befinden und keine Photonen absorbieren können.

Im Tagungsband der Optical Fiber Communication Conference (OFC '92), Band 1, Beitrag TuC5, auf den Seiten 15 und 16, ist ein nichtlinearer Wellenleiter-Gitter-Koppler beschrieben. Auch der hier beschriebene nichtlineare Effekt, der eine Änderung des Brechungsindex des Wellenleiters bewirkt, läßt sich vorteilhaft zur Realisierung der Erfindung einsetzen. In der erwähnten Arbeit führt die erwähnte Änderung des Brechungsindex des Wellenleiters zu einer Änderung der spektralen Übertragungsfunktion des Bauteils.

In einem wichtigen Spezialfall ist mindestens ein optisches Signal, und zwar Pumpsignale PU, PU2, PU3, PU4, PU5, PU6, Pumpsignalanteile PUK1, PUK2, PUA, PUA1, PUA11, PUA12, PUA2, PUA21, PUA22, Probensignale PR, und/oder Probensignalanteile PRA, PRA1, PRA2, bezüglich mindestens einem der Parameter Amplitude, Polarisation, Wellenlänge, Frequenz und Phase moduliert. Beispielsweise verwendet man modulierte, insbesondere amplitudenmodulierte, optische Datensignalpulse für Pumpsignal PU, PU2, PU3, PU4, PU5, PU6, und/oder Probensignal PR und dementsprechend auch für Anteile dieser Signale.

In einem letzten Ausführungsbeispiel weisen zumindest Teile der Einrichtung doppelbrechende, polarisationserhaltende Lichtwellenleiter auf. Insbesondere wird die Notwendigkeit einer einmaligen oder wiederholten Polarisationsjustierung in der Einrichtung vollkommen eliminiert, wenn alle Teile der Einrichtung polarisationserhaltend ausgeführt sind. Nicht polarisationserhaltend sind dann i.a. lediglich der das beliebig polarisierte Pumpsignal PU der Einrichtung zuführende Lichtwellenleiter und, bei Unabhängigkeit der Funktion der Einrichtung auch von der Polarisation des Probensignals PR, ggf. auch der das Probensignal PR der Einrichtung zuführende Lichtwellenleiter.

**Patentansprüche**

1. Nichtlineare optische Signalverarbeitungseinrichtung, mit einer Pumpsignaladditionsstelle (K), enthaltend mindestens ein Pumpsignaltor (K1) zur Einspeisung eines optischen Pumpsignals (PU) mit einer Pumpsignalwellenlänge (LPU), mindestens ein Probensignaltor (K2) zur Einspeisung eines optischen Probensignals (PR) mit einer Probensignalwellenlänge (LPR) und einer ersten Polarisation (P1), und mindestens ein Ausgangstor (K3), an dem zumindest Anteile des Pumpsignals (PU) als gekoppeltes Pumpsignal (PUK) und zumindest Anteile des Probensignals (PR) als gekoppeltes Probensignal (PRK) auftreten, sowie ein mindestens einen nicht vernachlässigbaren nichtlinearen optischen Effekt aufweisendes Medium (NL) mit einem Eingang (NL1), zu dem optische Signale, die aus dem Ausgangstor (K3) der Pumpsignaladditionsstelle (K) austreten, über eine optische Verbindung (V) wenigstens teilweise übertragen werden, und einem Ausgang (NL2), an dem das dem nichtlinearen optischen Effekt unterworfene ausgangsseitige Probensignal (PRA) auftritt, und an dem zumindest Anteile (PUA) des Pumpsignals (PU) auftreten können, wobei durch den nichtlinearen optischen Effekt die gekoppelten Probensignale (PRK) bezüglich mindestens einer der Größen Phase, Ausbreitungsgeschwindigkeit, Frequenzgehalt, Polarisation und Leistung einer Beeinflussung unterworfen sind, die von der Leistung und/oder vom zeitlichen Verlauf der Leistung des gekoppelten Pumpsignals (PUK) und/oder des Pumpsignals (PU) abhängt und dabei das Verhältnis der Stärke (WP1) des nichtlinearen Effekts im Medium (NL) bezüglich des gekoppelten Probensignals (PRK) durch einen eine bestimmte Leistung sowie die erste Polarisation (P1) aufweisenden ersten Anteil (PUK1) des gekoppelten Pumpsignals (PUK) zu der Stärke (WP2) des nichtlinearen Effekts im Medium (NL) bezüglich des gekoppelten Probensignals (PRK) durch einen diese bestimmte Leistung sowie eine zur ersten Polarisation (P1) orthogonale zweite Polarisation (P2) aufweisenden zweiten Anteil (PUK2) des gekoppelten Pumpsignal (PUK) den Wert x besitzt, wobei x eine positive, reelle und von 1 verschiedene Zahl ist,
**dadurch gekennzeichnet,**

daß die Pumpsignaladditionsstelle (K) und/oder eine zusätzliche polarisierende Einrichtung derart ausgelegt sind,
daß darin erste Anteile (PU1) des optischen Pumpsignals (PU), welche einen die erste Polarisation (P1) aufweisenden ersten Anteil (PUK1) des gekoppelten Pumpsignal (PUK) erzeugen, um wenigstens näherungsweise den Faktor x stärker gedämpft werden als zweite Anteile (PU2) des Pumpsignals (PU), welche einen die zweite Polarisation (P2) aufweisenden zweiten Anteil (PUK2) des gekoppelten Pumpsignals (PUK) erzeugen, so daß die Beeinflussung und besonders der zeitliche Verlauf der Beeinflussung des ausgangsseitigen Probensignals (PRA) durch das Pumpsignal (PU) von der Polarisation dieses Pumpsignals (PU) wenigstens näherungsweise unabhängig sind.

2. Einrichtung nach Anspruch 1,
**dadurch gekennzeichnet,**
daß die Pumpsignaladditionsstelle (K) einen Polarisator (PP) enthält, den das Pumpsignal (PU) durchläuft, welcher die ersten Pumpsignalanteile (PU1), die erste Anteile (PUK1) des gekoppelten Pumpsignals (PUK) mit der ersten Polarisation (P1) am Ausgangstor (K3) der Pumpsignaladditionsstelle (K) erzeugen, um mindestens näherungsweise den Faktor x stärker dämpft als zweite Pumpsignalanteile (PU2), die zweite Anteile (PUK2) des gekoppelten Pumpsignals (PUK) mit der zweiten Polarisation (P2) am Ausgangstor (K3) der Pumpsignaladditionsstelle (K) erzeugen, welcher also ein Extinktionsverhältnis der Größe x zwischen der einen unverändert übertragenen Polarisation (P1) und der anderen unverändert übertragenen Polarisation (P2) aufweist, daß der Eingang (PP1) des Polarisators (PP) mit dem Pumpsignaltor (K1) der Pumpsignaladditionsstelle (K) verbunden ist, daß der Ausgang (PP2) des Polarisators (PP) mit einem Pumpsignaltor (K41) eines Kopplers (K4) verbunden ist, daß ein Probensignaltor (K42) des Kopplers (K4) mit dem Probensignaltor (K1) der Pumpsignaladditionsstelle (K) verbunden ist, daß ein Ausgangstor (K43) des Kopplers (K4) mit dem Ausgangstor (K3) der Pumpsignaladditionsstelle (K) verbunden ist und daß der Koppler (K4) für Pumpsignale (PU) ein wenigstens näherungsweise polarisationsunabhängiges Koppelverhältnis aufweist.

**3.** Einrichtung nach Anspruch 1,
**dadurch gekennzeichnet,**
daß die Pumpsignaladditionsstelle (K) ein zumindest für das Pumpsignal (PU) polarisationsabhängiger Koppler ist, welcher derart ausgelegt ist, daß erste Pumpsignalanteile (PU1), die erste Anteile (PUK1) des gekoppelten Pumpsignals (PUK) mit der ersten Polarisation (P1) am Ausgangstor (K3) der Pumpsignaladditionsstelle (K) erzeugen, bei der Übertragung vom Pumpsignaleingangstor (K1) zum Ausgangstor (K3) dieses polarisationsabhängigen Kopplers um mindestens näherungsweise den Faktor x schwächer gekoppelt werden als zweite Pumpsignalanteile (PU2), die zweite Anteile (PUK2) des gekoppelten Pumpsignals (PUK2) mit der zweiten Polarisation (P2) am Ausgangstor (K3) der Pumpsignaladditionsstelle (K) erzeugen, so daß eine mögliche Abhängigkeit des Koppelgrades dieses polarisationsabhängigen Kopplers von der Polarisation des Probensignals (PR) ohne Bedeutung ist, weil das Probensignal (PR) die bekannte erste Polarisation (P1) aufweist.

**4.** Einrichtung nach Anspruch 3,
**dadurch gekennzeichnet,**
daß der die Pumpsignaladditionsstelle (K) darstellende polarisationsabhängige Koppler derart ausgestaltet ist, daß er

- falls der Faktor x größer als 1 ist, die zweiten Pumpsignalanteile (PU2) mindestens näherungsweise vollständig zum Ausgangstor (K3) der Pumpsignaladditionsstelle (K) überträgt und daß

- falls der Faktor x kleiner als 1 ist, vom Koppler die ersten Pumpsignalanteile (PU1), mindestens näherungsweise vollständig zum Ausgangstor (K3) der Pumpsignaladditionsstelle (K) übertragen werden.

**5.** Einrichtung nach Anspruch 3,
**dadurch gekennzeichnet,**
daß der die Pumpsignaladditionsstelle (K) darstellende polarisationsabhängige Koppler (K) derart ausgelegt ist, daß er Probensignale (PR) mit zumindest der ersten Polarisation (P1) möglichst vollständig vom Probensignaltor (K2) zum Ausgangstor (K3) koppelt.

**6.** Einrichtung nach Ansprüchen 4 und/oder 5,
**dadurch gekennzeichnet**,
daß der die Pumpsignaladditionsstelle (K) darstellende polarisationsabhängige Koppler von der Wellenlänge eingespeister optischer Signale abhängige Koppelstärken aufweist.

**7.** Nichtlineare optische Signalverarbeitungseinrichtung, mit einer Pumpsignaladditionsstelle (K), enthaltend mindestens ein Pumpsignaltor (K1) zur Einspeisung eines optischen Pumpsignals (PU) mit einer Pumpsignalwellenlänge (LPU), mindestens ein Probensignaltor (K2) zur Einspeisung eines optischen Probensignals (PR) mit einer Probensignalwellenlänge (LPR) und einer ersten Polarisation (P1), und mindestens ein Ausgangstor (K3), an dem zumindest Anteile des Pumpsignals (PU) als gekoppeltes Pumpsignal (PUK) und zumindest Anteile des Probensignals (PR) als gekoppeltes Probensignal (PRK) auftreten, sowie ein mindestens einen nicht vernachlässigbaren nichtlinearen optischen Effekt aufweisendes Medium (NL) mit einem Eingang (NL1), zu dem optische Signale, die aus dem Ausgangstor (K3) der Pumpsignaladditionsstelle (K) austreten, über eine optische Verbindung (V) wenigstens teilweise übertragen werden, und einem Ausgang (NL2), an dem das dem nichtlinearen optischen Effekt unterworfene ausgangsseitige Probensignal (PRA) auftritt, und an dem zumindest Anteile (PUA) des Pumpsignals (PU) auftreten können, wobei durch den nichtlinearen optischen Effekt die gekoppelten Probensignale (PRK) bezüglich mindestens einer der Größen Phase, Ausbreitungsgeschwindigkeit, Frequenzgehalt, Polarisation und Leistung einer Beeinflussung unterworfen sind, die von der Leistung und/oder vom zeitlichen Verlauf der Leistung des gekoppelten Pumpsignals (PUK) und/oder des Pumpsignals (PU) abhängt und dabei das Verhältnis der Stärke (WP1) des nichtlinearen Effekts im Medium (NL) bezüglich des gekoppelten Probensignals (PRK) durch einen eine bestimmte Leistung sowie die erste Polarisation (P1) aufweisenden ersten Anteil (PUK1) des gekoppelten Pumpsignals (PUK) zu der Stärke (WP2) des nichtlinearen Effekts im Medium (NL) bezüglich des gekoppelten Probensignals (PRK) durch einen diese bestimmte Leistung sowie eine zur ersten Polarisation (P1) orthogonale zweite Polarisation (P2) aufweisenden zweiten Anteil (PUK2) des gekoppelten Pumpsignal (PUK) den Wert x besitzt, wobei x eine positive, reelle und von 1 verschiedene Zahl ist,
**dadurch gekennzeichnet,**
daß eine Meßeinrichtung (ME) derart angeordnet ist, daß deren Eingang (ME1) zumindest Teile der ausgangsseitigen, durch einen nichtlinearen optischen Effekt beeinflußten Probensignalanteile (PRA) oder daraus abgeleiteter Signale (AGPRA) zugeführt werden können, daß diese Meßeinrichtung (ME) so ausgebildet ist, daß ein an einem Ausgang (ME2) dieser Meßeinrichtung (ME) auftretendes Meßsignal (MES)

- von der Stärke der Beeinflussung der Probensignalanteile (PRA) durch einen nichtlinearen optischen Effekt und/oder

- von der Differenz zwischen der Stärke der Beeinflussung der Probensignalanteile (PRA) durch einen nichtlinearen optischen Effekt und einer vorgegebenen, anzustrebenden Sollstärke dieser Beeinflussung abhängt,

daß ein Eingang (R1) eines Reglers (R) mit dem Ausgang (ME2) dieser Meßeinrichtung (ME) verbunden ist, daß an einem Ausgang (R2) des Reglers (R) ein Stellsignal (RS) auftritt, daß ein Ausgang (R2) des Reglers (R) mit einem Stelleingang (ST3) eines Stellglieds (ST) verbunden ist, daß das Pumpsignal (PU), welches an einem Eingang (ST1) in dieses Stellglied (ST) eintritt und an einem Ausgang (ST2) aus diesem Stellglied (ST) austritt, bezüglich mindestens einer der Größen Polarisation und Leistung einer vom Stellsignal (RS) abhängigen Veränderung unterwirft, so daß Beeinflussung und besonders der zeitliche Verlauf der Beeinflussung der austretenden Probensignalanteile (PRA) durch das optische Pumpsignal (PU) von der Polarisation dieses Pumpsignals (PU) wenigstens näherungsweise unabhängig sind.

8. Einrichtung nach Anspruch 7,
   **dadurch gekennzeichnet,**
   daß das Stellglied (ST) das Pumpsignal (PU) bezüglich seiner Leistung einer Veränderung unterwirft, daß das Stellglied (ST) einen durch das am Stelleingang (ST3) anliegende Stellsignal (RS) regelbaren optischen

   - Amplitudenmodulator oder
   - Verstärker

   aufweist, daß die Leistung von am Ausgang (ST2) des Stellglieds (ST) auftretenden Pumpsignalen bei Auftreten eines optischen Pumpsignals (PU), das ausschließlich aus ersten Anteilen (PU1) besteht, welche einen die erste Polarisation (P1) aufweisenden ersten Anteil (PUK1) des gekoppelten Pumpsignals (PUK) erzeugen, durch das Stellglied (ST) um wenigstens näherungsweise den Faktor x stärker gedämpft und/oder weniger verstärkt werden als bei Auftreten eines optischen Pumpsignals (PU), das ausschließlich aus zweiten Anteilen (PU2) besteht, welche einen die zweite Polarisation (P2) aufweisenden zweiten Anteil (PUK2) des gekoppelten Pumpsignals (PUK) erzeugen.

9. Einrichtung nach Anspruch 7,
   **dadurch gekennzeichnet,**
   daß das Stellglied (ST) das Pumpsignal (PU) bezüglich seiner Polarisation einer Veränderung unterwirft, daß das Stellglied (ST) ein durch das am Stelleingang (ST3) anliegende Stellsignal (RS) regelbares optisches Polarisationsstellglied aufweist, daß die Polarisation von am Ausgang (ST2) des Stellglieds (ST) auftretenden Pumpsignalen von der Polarisation des eingangsseitig auftretenden Pumpsignals (PU) unabhängig ist.

10. Einrichtung nach einem der Ansprüche 1 bis 9,
    **dadurch gekennzeichnet,**
    daß eine zumindest für optische Signale der Probensignal-Wellenlänge (LPR) polarisierend wirkende Einrichtung (PE) vorgesehen ist, in der ein die erste Polarisation (P1) aufweisender erster Probensignalanteil (PRK1) in stärkerem Maße übertragen wird als ein die zweite Polarisation (P2) aufweisender zweiter Probensignalanteil (PRK2), so daß die Polarisation der ausgangsseitigen Probensignalanteile (PRA) von der Polarisation des Pumpsignals (PU) wenigstens näherungsweise unabhängig ist.

11. Einrichtung nach Anspruch 10,
    **dadurch gekennzeichnet,**
    daß das Medium (NL) die polarisierend wirkende Einrichtung (PE) enthält und/oder die Funktion einer polarisierend wirkenden Einrichtung (PE) aufweist.

12. Einrichtung nach Anspruch 10,
    **dadurch gekennzeichnet**,
    daß ein Eingang (PE1) der polarisierend wirkenden Einrichtung (PE) mit einem Ausgang (NL2) des Mediums (NL) verbunden ist, und daß die ausgangsseitigen Probensignalanteile (PRA) an einem Ausgang (PE2) der polarisierend wirkenden Einrichtung (PE) auftreten.

**13.** Einrichtung nach einem der Ansprüche 10 bis 12,
**dadurch gekennzeichnet,**
daß die polarisierend wirkende Einrichtung (PE) so wellenlängenabhängig ausgebildet ist, daß Signale der Pumpsignal-Lichtwellenlänge (LPU), insbesondere bezüglich ihrer Polarisation und/oder der Stärke der die erste Polarisation (P1) aufweisenden Komponenten im Vergleich zur Stärke der die zweite Polarisation (P2) aufweisenden Komponenten,

- mindestens in schwächerem Maße als Signale der Probensignal-Lichtwellenlänge (LPR)

oder

- in im Vergleich zu Signalen der Probensignal-Lichtwellenlänge (LPR) entgegengesetzter Weise

beeinflußt werden.

**14.** Einrichtung nach einem der Ansprüche 1 bis 13,
**dadurch gekennzeichnet,**
daß das einen nichtlinearen Effekt aufweisende Medium (NL) aus Stücken polarisationserhaltender Lichtwellenleiter zusammengesetzt ist, daß die Laufzeitdifferenz für Lichtsignale der einen erhaltenen Polarisation gegenüber solchen der anderen erhaltenen Polarisation dadurch gering ist, daß Lichtwellenleitern mit positiver sowie solchen mit negativer Laufzeitdifferenz für diese Lichtsignale aneinandergefügt sind.

**15.** Einrichtung nach einem der Ansprüche 1 bis 14,
**dadurch gekennzeichnet,**
daß der optische Kerreffekt als nichtlinearer Effekt dient und die Beeinflussung der ausgangsseitigen Probensignalanteile (PRA1, PRA2) zumindest bezüglich der Phase dieser Probensignalanteile auftritt.

**16.** Einrichtung nach einem der Ansprüche 1 bis 14,
**dadurch gekennzeichnet,**
daß Pumpsignaladditionsstelle (K), Verbindung (V) und Medium (NL) in einem nichtlinearen optischen Faserschleifenspiegel oder nichtlinearem Sagnac-Interferometer enthalten sind.

**17.** Einrichtung nach einem der Ansprüche 1 bis 14,
**dadurch gekennzeichnet,**
daß Pumpsignaladditionsstelle (K), Verbindung (V) und Medium (NL) in einer Einrichtung zur optischen Vierwellenmischung enthalten sind.

**18.** Einrichtung nach einem der Ansprüche 1 bis 14,
**dadurch gekennzeichnet,**
daß Pumpsignaladditionsstelle (K), Verbindung (V) und Medium (NL) in einer Einrichtung zur optischen Frequenzverschiebung enthalten sind.

**19.** Nichtlineare optische Signalverarbeitungseinrichtung mit einem optischen Koppler (KO1), der mindestens zwei Eingangstore (E1, E2) und mindestens zwei Ausgangstore (A1, A2) aufweist, dessen erstes Eingangstor (E1) zur Einspeisung eines optischen Probensignals (PR) einer Probensignal-Wellenlänge (LPR) ausgelegt ist, mit einer in beiden Richtungen lichtdurchlässigen optischen Schleifenverbindung (SCH), die zwei Ausgangstore (A1, A2) des Kopplers (KO1) unter Einschluß mindestens eines mindestens einen nicht vernachlässigbaren nichtlinearen optischen Effekt aufweisenden Mediums (NL) so miteinander verbindet, daß ein an einem ersten Ausgangtor (A1) des Kopplers (KO1) austretender erster optischer Probensignalanteil (PRA1) in ein zweites Ausgangstor (A2) des Kopplers (KO1) eingespeist und ein am zweiten Ausgangtor (A2) des Kopplers (KO1) austretender zweiter optischer Probensignalanteil (PRA2) in das erste Ausgangstor (A1) des Kopplers (KO1) eingespeist wird, so daß an mindestens einem der Eingangstore (E1, E2) des Kopplers (KO1) Anteile (PRE1, PRE2) des optischen Probensignals austreten, mit mindestens einer Pumpsignaladditionsstelle (KO8, KO9), in welcher oder welchen mindestens ein Pumpsignal (PU) einer Pumpsignal-Wellenlänge (LPU) , welches zwei Pumpsignalkomponenten (PUA6, PUA7) mit zueinander orthogonalen Polarisationen (P6, P7) aufweist und/oder aus welchem zwei Pumpsignalkomponenten (PUA6, PUA7) mit zueinander orthogonalen Polarisationen (P6, P7) abgeleitet werden, und/oder mindestens eine dieser Pumpsignalkomponenten (PUA6, PUA7) von einem Eingang (K082, K092) zu einem Ausgang (K083, K093) der betreffenden Pumpsignaladditionsstelle (KO8, KO9) geführt und in die optische Schleifenverbindung (SCH) eingeführt wird, in der der vom ersten Ausgangstor (A1) zum zweiten Ausgangstor (A2) des Kopplers KO1 sich ausbreitende Probensignalanteil (PRA1) durch mindestens einen nicht vernachlässigbaren nichtlinearen optischen Effekt in der optischen Schleifenverbindung (SCH) bezüglich mindestens einer der Größen Phase, Polarisation und Amplitude in anderer Weise beeinflußt wird als der sich vom zweiten zum ersten Ausgangstor ausbreitende Probensignalanteil (PRA2), so daß die aus mindestens einem der Eingangstore (E1, E2) des Kopplers (KO1) austretenden Probensignalanteile (PRE1, PRE2) in mindestens einer der Größen Phase, Polarisation, Amplitude und Leistung in Abhängigkeit von mindestens einer der Größen Phase, Polarisation, Amplitude und Leistung mindestens eines optischen Pumpsignals (PU) und/oder mindestens einer dieser Pumpsignalkomponenten (PUA6, PUA7) einer Beeinflussung unterworfen werden, die vom zeitlichen Verlauf mindestens eines optischen Pumpsignals (PU) und/oder mindestens einer dieser Pumpsignalkomponenten (PUA6, PUA7) abhängt, in der diese zwei Pumpsignalkomponenten (PUA6, PUA7) in das Medium (NL) in mit der Ausbreitungsrichtung eines ersten Probensignalanteils (PRA1) identischen Ausbreitungsrichtungen eingespeist werden,
**dadurch gekennzeichnet,**
daß das Medium (NL) mindestens zwei Teile (NL8, NL9) aufweist, die so angeordnet sind, daß ein erster dieser Teile (NL8) zumindest bei Auftreten einer ersten Polarisation (P1) dieses ersten Probensignalanteils (PRA1) in dieser ersten Polarisation (P1) diese erste Pumpsignalkomponente (PUA6), aber in dieser ersten Polarisation (P1) im wesentlichen keine zweite Pumpsignalkomponente (PUA7) aufweist und daß ein zweiter dieser Teile (NL9) zumindest bei Auftreten einer ersten Polarisation (P1) dieses ersten Probensignalanteils (PRA1) in dieser ersten Polarisation (P1) diese zweite Pumpsignalkomponente (PUA7), aber in dieser ersten Polarisation (P1) im wesentlichen keine erste Pumpsignalkomponente (PUA6) aufweist, daß eine erste Pumpsignaladditionsstelle (KO8), ein erster dieser Teile (NL8) des Mediums (NL) und ein zweiter dieser Teile (NL9) des Mediums (NL) in Ausbreitungsrichtung dieser ersten Probensignalanteile (PRA1) hintereinander angeordnet sind, daß bei Verwendung doppelbrechender, polarisationserhaltender Lichtwellenleiter in Medium (NL) und/oder Teilen (NL8, NL9) des Mediums (NL) diese so angeordnet sind, daß die Polarisationen dieser Pumpsignalkomponenten (PUA6, PUA7) in Medium (NL) und/oder Teilen (NL8, NL9) des Mediums (NL) gleich Hauptpolarisationsmoden dieser doppelbrechenden, polarisationserhaltenden Lichtwellenleitern sind.

20. Einrichtung nach Anspruch 19,
**dadurch gekennzeichnet,**
daß eine zweite Pumpsignaladditionsstelle (KO9) zwischen dem ersten dieser Teile (NL8) des Mediums (NL) und dem zweiten dieser Teile (NL9) des Mediums (NL) angeordnet ist, daß die Einrichtung einen Polarisationsstrahlteiler (PBS) aufweist, daß dieser Polarisationsstrahlteiler (PBS), welchem Pumpsignale (PU) der Pumpsignal-Wellenlänge (LPU) an einem Eingang (PBS1) dieses Polarisationsstrahlteilers (PBS) zugeführt werden, aus diesen eingangsseitigen Pumpsignalen (PU) ausgangsseitig diese zwei Pumpsignalkomponenten (PUA6, PUA7) ableitet, daß ein die erste Pumpsignalkomponenten (PUA6) aufweisender Ausgang (PBS6) des Polarisationsstrahlteilers (PBS) mit einem Eingang (KO82) der ersten Pumpsignaladditionsstelle (KO8) verbunden ist, daß ein die zweite Pumpsignalkomponenten (PUA7) aufweisender Ausgang (PBS7) des Polarisationsstrahlteilers (PBS) mit einem Eingang (KO92) der zweiten Pumpsignaladditionsstelle (KO9) verbunden ist.

21. Einrichtung nach Anspruch 20,
**dadurch gekennzeichnet,**
daß die der zweiten Pumpsignaladditionsstelle (KO9) zugeführte Pumpsignalkomponente (PUA7) gegenüber der der ersten Pumpsignaladditionsstelle (KO8) zugeführten Pumpsignalkomponente (PUA6) in einer Verzögerungsleitung (VL) wenigstens näherungsweise um diejenige Zeit verzögert wird, um die ein erster Probensignalanteil (PRA1) zwischen der ersten Pumpsignaladditionsstelle (KO8) und der zweiten Pumpsignaladditionsstelle (KO9) verzögert wird, so daß bei vom Wert Null verschiedener Stärken beider zu einem bestimmten Zeitpunkt aus einem Pumpsignal (PU) abgeleiteten Pumpsignalkomponenten (PUA6, PUA7) diese beiden Pumpsignalkomponenten (PUA6, PUA7) jeweils dieselben zeitlichen Anteile eines ersten Probensignalanteils (PRA1) beeinflussen.

22. Einrichtung nach Anspruch 20 oder 21,
**dadurch gekennzeichnet,**
daß zwischen dem ersten dieser Teile (NL8) des Mediums (NL) und der zweiten Pumpsignaladditionsstelle (KO9) ein optisches Filter (OF) in die optische Schleifenverbindung (SCH) eingefügt ist, welches die erste Pumpsignalkomponente (PUA6) dämpft, so daß der zweite dieser Teile (NL9) des Mediums (NL) im wesentlichen keine erste Pumpsignalkomponente (PUA6) aufweist.

23. Einrichtung nach Anspruch 19,
**dadurch gekennzeichnet,**

daß das Medium (NL) und/oder die beiden Teile (NL8, NL9) des Mediums (NL) doppelbrechende polarisationserhaltende Lichtwellenleiter mit zwei zueinander orthogonalen Hauptpolarisationsmoden (P1, P2) aufweisen, daß ein diese zwei Pumpsignalkomponenten (PUA6, PUA7) aufweisendes Pumpsignal (PU) in eine erste Pumpsignaladditionsstelle (KO8) geführt werden kann, daß zwischen den beiden Teilen (NL8, NL9) des Mediums (NL) ein wellenlängenabhängiger Polarisationskonverter (PK) eingefügt ist, welcher bei eingangsseitigem Auftreten von eine dieser Hauptpolarisationsmoden (P1, P2) aufweisenden Pumpsignalkomponenten der Pumpsignal-Wellenlänge (LPU) und von dieselbe Hauptpolarisationsmode (P1, P2) aufweisenden ersten Probensignalanteilen (PRA1) der Probensignalwellenlänge (LPR) ausgangseitig Pumpsignalkomponenten der einen Hauptpolarisationsmode (P1) und erste Probensignalanteile (PRA1) der dazu orthogonalen Hauptpolarisationsmode (P2) erzeugt.

24. Einrichtung nach Anspruch 23,
**dadurch gekennzeichnet,**
daß der wellenlängenabhängige Polarisationskonverter (PK) einen doppelbrechenden polarisationserhaltenden Lichtwellenleiter aufweist, dessen Hauptpolarisationsmoden mit den Hauptpolarisationsmoden (P1, P2) beider Teile (NL8, NL9) des Mediums (NL) jeweils Winkel von ±45° einschließen und der für Signale der Pumpsignal-Wellenlänge (LPU) eine erste ganze Zahl von halben Schwebungslängen und für Signale der Probensignal-Wellenlänge (LPR) eine zweite ganze, insbesondere gerade Zahl von halben Schwebungslängen, die sich von der ersten ganzen Zahl um eine ungerade Zahl, insbesondere 1 oder -1, unterscheidet, aufweist.

25. Einrichtung nach einem der Ansprüche 23 bis 24,
**dadurch gekennzeichnet,**
daß das Medium (NL) und/oder die Teile (NL8, NL9) des Mediums (NL) jeweils aus mindestens zwei doppelbrechenden, polarisationserhaltenden Lichtwellenleiterstücken (S1, S2, S3, S4, ...) zusammengesetzt sind, daß doppelbrechende, polarisationserhaltende Lichtwellenleiterstücke (S1, S3, ...) mit positiver sowie doppelbrechende, polarisationserhaltende Lichtwellenleiterstücke (S2, S4, ...) mit negativer Laufzeitdifferenz zwischen Lichtsignalen der einen erhaltenen Polarisation gegenüber Lichtsignalen der anderen erhaltenen Polarisation aneinandergefügt sind, so daß die Laufzeitdifferenz zwischen Lichtsignalen der einen erhaltenen Polarisation gegenüber Lichtsignalen der anderen erhaltenen Polarisation bei Lichtsignalausbreitung durch das gesamte Medium (NL) geringer ist als die Laufzeitdifferenz für Lichtsignale der einen erhaltenen Polarisation gegenüber solchen der anderen erhaltenen Polarisation in mindestens einem der Lichtwellenleiterstücke (S1, S2, S3, S4, ...).

26. Einrichtung nach einem der Ansprüche 23 bis 25,
**dadurch gekennzeichnet,**
daß mindestens ein die Einrichtung verlassendes Probensignal oder ein Probensignalanteil (PR, PRK, PRA, PRE1, PRE2) durch mindestens ein optisches Filter (OF) geleitet wird, welches Signale der Pumpsignal-Wellenlänge (LPU) dämpft, so daß dieses die Einrichtung verlassende Signal im wesentlichen keine Pumpsignale (PU, PU2, PU3, PU4, PU5, PU6) oder Pumpsignalkomponenten (PUA6, PUA7) aufweist.

27. Einrichtung nach Anspruch 19 bis 25,
**dadurch gekennzeichnet,**
daß das Medium den optischen Kerreffekt als nichtlinearem Effekt aufweist und die Beeinflussung der Probensignale oder ihrer Anteile (PR, PRK, PRA, PRA1, PRA2) zumindest bezüglich der Phase dieser Probensignale oder ihrer Anteile auftritt.

28. Einrichtung nach Anspruch 27,
**dadurch gekennzeichnet,**
daß bei dieselbe Polarisation (P8) wie die erste Pumpsignalkomponente (PRA6) aufweisenden ersten Probensignalanteilen (PRA1) diese ersten Probensignalanteile (PRA1) in der optischen Schleifenverbindung (SCH) bezüglich ihrer Phase um mindestens näherungsweise einen Phasenwinkel der Größe $3\pi$ stärker beeinflußt werden als die zweiten Probensignalanteile (PRA2), so daß bei eine zur Polarisation (P8) der ersten Pumpsignalkomponente (PRA6) orthogonale Polarisation aufweisenden ersten Probensignalanteilen (PRA1) diese ersten Probensignalanteile (PRA1) in der optischen Schleifenverbindung (SCH) bezüglich ihrer Phase um mindestens näherungsweise einen Phasenwinkel der Größe $\pi$ stärker beeinflußt werden als die zweiten Probensignalanteile (PRA2) und die Beeinflussung der Leistung von austretenden Probensignalanteilen (PRE1, PRE2) durch ein optisches Pumpsignal (PU) und/oder mindestens eine Pumpsignalkomponente (PUA6, PUA7) von der Polarisation eines optischen Probensignals (PR) unabhängig ist.

29. Einrichtung nach einem der vorhergehenden Ansprüche,

## EP 0 595 207 B1

**dadurch gekennzeichnet,**

daß die Einrichtung eine Gewinnsättigung von Laserverstärkern, insbesondere Halbleiter-Laserverstärkern, als einen verwendeten nichtlinearen optischen Effekt im Medium (NL) aufweist.

**30.** Einrichtung nach einem der vorhergehenden Ansprüche,
**dadurch gekennzeichnet,**

daß die Einrichtung eine nichtlineare Abhängigkeit des optischen Ausgangssignals eines sättigbaren Absorbers, insbesondere in Form eines nicht elektrisch gepumpten Halbleiter-Laserverstärkers, vom Eingangssignal dieses Absorbers als einen verwendeten nichtlinearen optischen Effekt im Medium (NL) aufweist.

**31.** Einrichtung nach einem der vorhergehenden Ansprüche,
**dadurch gekennzeichnet,**

daß die Einrichtung eine Änderung des Brechungsindex eines Wellenleiters, insbesondere eines Wellenleiters, der Teil eines nichtlinearen Wellenleiter-Gitter-Kopplers ist und/oder der ein Halbleitermaterial aufweist, im Medium (NL) aufweist.

**32.** Einrichtung nach einem der Ansprüche 19 bis 25,
**dadurch gekennzeichnet,**

daß in der Einrichtung Probensignale (PR), ihre Anteile (PRK, PRA, PRA1, PRA2), Pumpsignale (PU, PU2, PU3, PU4, PU5) und/oder Pumpsignalkomponenten (PRA6, PRA7), die bezüglich mindestens einem der Parameter Amplitude, Polarisation, Wellenlänge, Frequenz und Phase moduliert sind verarbeitet werden können.

**33.** Einrichtung nach einem der Ansprüche 19 bis 25,
**dadurch gekennzeichnet,**

daß in der Einrichtung, insbesondere im Medium (NL) und/oder Teilen (NL8, NL9) des Mediums (NL) auftretende doppelbrechende, polarisationserhaltende Lichtwellenleiterstücke lineare Hauptpolarisationsmoden oder erhaltene Polarisationen aufweisen.

## Claims

**1.** Nonlinear optical signal processing device, having a pumping signal addition point (K), containing at least one pumping signal port (K1) for feeding an optical pumping signal (PU) with a pumping signal wavelength (LPU), at least one sample signal port (K2) for feeding an optical sample signal (PR) with a sample signal wavelength (LPR) and having a first polarization (P1), and at least one output port (K3), at which at least components of the pumping signal (PU) occur as a coupled pumping signal (PUK), and at least components of the sample signal (PR) occur as a coupled sample signal (PRK), as well as a medium (NL), having at least one non-negligible nonlinear optical effect, with an input (NL1) to which optical signals which emerge from the output port (K3) of the pumping signal addition point (K) are transmitted at least partially via an optical connection (V), and with an output (NL2), at which the output-side sample signal (PRA) subjected to the nonlinear optical effect occurs, and at which at least components (PUA) of the pump signal (PU) can occur, the nonlinear optical effect subjecting the coupled sample signals (PRK) with respect to at least one of the variables of phase, propagation velocity, frequency content, polarization and power to an influence which is a function of the power and/or of the temporal variation of the power of the coupled pumping signal (PUK) and/or of the pumping signal (PU), and in this case the ratio of the intensity (WP1) of the nonlinear effect in the medium (NL) with respect to the coupled sample signal (PRK) due to a first component (PUK1), having a specific power and the first polarization (P1), of the coupled pumping signal (PUK) to the intensity (WP2) of the nonlinear effect in the medium (NL) with respect to the coupled sample signal (PRK) due to a second component (PUK2), having this specific power and a second polarization (P2) orthogonal to the first polarization (P1), of the coupled pumping signal (PUK) has the value x, x being a positive, real number differing from 1, characterized in that the pumping signal addition point (K) and/or an additional polarizing device are designed in such a way that therein first components (PU1) of the optical pumping signal (PU), which generate a first component (PUK1), having the first polarization (P1), of the coupled pumping signal (PUK) are attenuated more strongly by at least approximately the factor x than the second components (PU2) of the pumping signal (PU), which generate a second component (PUK2), having the second polarization (P2), of the coupled pumping signal (PUK), with the result that the influence, and in particular the temporal variation, of the influence of the output-side sample signal (PRA) due to the pumping signal (PU) is at least approximately independent of the polarization of this pumping signal (PU).

**2.** Device according to Claim 1, characterized in that the pumping signal addition point (K) contains a polarizer (PP) which the pumping signal (PU) traverses and which attenuates the first pumping signal components (PU1), which generate first components (PUK1) of the coupled pumping signal (PUK) having the first polarization (P1) at the output port (K3) of the pumping signal addition point (K), more strongly by at least approximately the factor x than second pumping signal components (PU2), which generate second components (PUK2) of the coupled pumping signal (PUK) having the second polarization (P2) at the output port (K3) of the pumping signal addition point (K), and which therefore has an extinction ratio of magnitude x between the one polarization (P1), transmitted without change, and the other polarization (P2), transmitted without change, in that the input (PP1) of the polarizer (PP) is connected to the pumping signal port (K1) of the pumping signal addition point (K), in that the output (PP2) of the polarizer (PP) is connected to a pumping signal port (K41) of a coupler (K4), in that a sample signal port (K42) of the coupler (K4) is connected to the sample signal port (K1) of the pumping signal addition point (K), in that an output port (K43) of the coupler (K4) is connected to the output port (K3) of the pumping signal addition point (K), and in that the coupler (K4) for pumping signals (PU) has a coupling ratio which is at least approximately independent of polarization.

**3.** Device according to Claim 1, characterized in that the pumping signal addition point (K) is a coupler which is dependent on polarization, at least for the pumping signal (PU), and which is designed in such a way that first pumping signal components (PU1), which generate first components (PUK1) of the coupled pumping signal (PUK) having the first polarization (P1) at the output port (K3) of the pumping signal addition point (K), are coupled during the transmission from the pumping signal input port (K1) to the output port (K3) of this polarization-dependent coupler more weakly by at least approximately the factor x than second pumping signal components (PU2), which generates second components (PUK2) of the coupled pumping signal (PUK2) having the second polarization (P2) at the output port (K3) of the pumping signal addition point (K), with the result that a possible dependence of the coupling factor of this polarization-dependent coupler on the polarization of the sample signal (PR) is of no importance, because the sample signal (PR) has the known first polarization (P1).

**4.** Device according to Claim 3, characterized in that the polarization-dependent coupler representing the pumping signal addition point (K) is configured in such a way that

- if the factor x is greater than 1, it transmits the second pumping signal components (PU2) at least approximately completely to the output port (K3) of the pumping signal addition point (K), and that
- if the factor x is smaller than 1, the coupler transmits the first pumping signal components (PU1) at least approximately completely to the output port (K3) of the pumping signal addition point (K).

**5.** Device according to Claim 3, characterized in that the polarization-dependent coupler representing the pumping signal addition point (K) is designed in such a way that it couples sample signals (PR) having at least the first polarization (P1) as completely as possible from the sample signal port (K2) to the output port (K3).

**6.** Device according to Claims 4 and/or 5, characterized in that the polarization-dependent coupler representing the pumping signal addition point (K) has coupling intensities which are a function of the wavelength of optical signals fed.

**7.** Nonlinear optical signal processing device, having a pumping signal addition point (K), containing at least one pumping signal port (K1) for feeding an optical pumping signal (PU) with a pumping signal wavelength (LPU), at least one sample signal port (K2) for feeding an optical sample signal (PR) with a sample signal wavelength (LPR) and having a first polarization (P1), and at least one output port (K3), at which at least components of the pumping signal (PU) occur as a coupled pumping signal (PUK), and at least components of the sample signal (PR) occur as a coupled sample signal (PRK), as well as a medium (NL), having at least one non-negligible nonlinear optical effect, with an input (NL1) to which optical signals which emerge from the output port (K3) of the pumping signal addition point (K) are transmitted at least partially via an optical connection (V), and with an output (NL2), at which the output-side sample signal (PRA) subjected to the nonlinear optical effect occurs, and at which at least components (PUA) of the pump signal (PU) can occur, the nonlinear optical effect subjecting the coupled sample signals (PRK) with respect to at least one of the variables of phase, propagation velocity, frequency content, polarization and power to an influence which is a function of the power and/or of the temporal variation of the power of the coupled pumping signal (PUK) and/or of the pumping signal (PU), and in this case the ratio of the intensity (WP1) of the nonlinear effect in the medium (NL) with respect to the coupled sample signal (PRK) due to a first component (PUK1), having a specific power and the first polarization (P1), of the coupled pumping signal (PUK) to the intensity (WP2) of the nonlinear effect in the medium (NL) with respect to the coupled sample signal (PRK) due to a second component (PUK2), having this specific power and a second polarization (P2) orthogonal to the first polarization (P1), of the coupled pumping signal (PUK) has the value x, x being a positive, real number differing from 1, characterized in that a measuring device (ME) is arranged in such a way that its input (ME1) can be fed at least parts of the output-side sample signal components (PRA), influenced by a nonlinear optical effect, or signals (AGPRA) derived therefrom, in that this measuring device (ME) is designed in such a way that a measuring signal (MES) occurring at an output (ME2) of this measuring device (ME) is a function

- of the intensity of the influence exerted on the sample signal components (PRA) by a nonlinear optical effect and/or
- of the difference between the intensity of the influence exerted on the sample signal components (PRA) by a nonlinear optical effect and a prescribed, target desired intensity of this influence,

in that an input (R1) of a controller (R) is connected to the output (ME2) of this measuring device (ME), in that a control signal (RS) occurs at an output (R2) of the controller (R), and in that an output (R2) of the controller (R) is connected to an actuating input (ST3) of an actuator (ST) which subjects the pumping signal (PU), which enters this actuator (ST) at an input (ST1) and emerges from this actuator (ST) at an output (ST2), with respect to at least one of the variables of polarization and power, to a change dependent on the control signal (RS), with the result that the influence and, in particular, the temporal variation of the influence of the emerging sample signal components (PRA) due to the optical pumping signal (PU) are at least approximately independent of the polarization of this pumping signal (PU).

8. Device according to Claim 7, characterized in that the actuator (ST) subjects the pumping signal (PU) to a change with respect to its power, in that the actuator (ST) has an optical

- amplitude modulator or
- amplifier

which can be controlled by the control signal (RS) present at the actuating input (ST3), in that in the case of the occurrence of an optical pumping signal (PU) which exclusively comprises first components (PU1) which generate a first component (PUK1), having the first polarization (P1), of the coupled pumping signal (PUK), the power of pumping signals occurring at the output (ST2) of the actuator (ST) is attenuated more strongly and/or amplified less by the actuator (ST) by at least approximately the factor x than in the case of the occurrence of an optical pumping signal (PU) which exclusively comprises second components (PU2) which generate a second component (PUK2), having the second polarization (P2), of the coupled pumping signal (PUK).

9. Device according to Claim 7, characterized in that the actuator (ST) subjects the pumping signal (PU) with respect to its polarization to a change, in that the actuator (ST) has an optical polarization actuator which can be controlled by the control signal (RS) present at the actuating input (ST3), and in that the polarization of pumping signals occurring at the output (ST2) of the actuator (ST) is independent of the polarization of the pumping signal (PU) occurring on the input side.

10. Device according to one of Claims 1 to 9, characterized in that a device (PE) is provided which acts in a polarizing fashion at least for optical signals of the sample signal wavelength (LPR) and in which a first sample signal component (PRK1) having the first polarization (P1) is transmitted more strongly than a second sample signal component (PRK2) having the second polarization (P2), with the result that the polarization of the output-side sample signal components (PRA) is at least approximately independent of the polarization of the pumping signal (PU).

11. Device according to Claim 10, characterized in that the medium (NL) contains the device (PE) acting in a polarizing fashion and/or has the function of a device (PE) acting in a polarizing fashion.

12. Device according to Claim 10, characterized in that an input (PE1) of the device (PE) acting in a polarizing fashion is connected to an output (NL2) of the medium (NL), and in that the output-side sample signal components (PRA) occur at an output (PE2) of the device (PE) acting in a polarizing fashion.

13. Device according to one of Claims 10 to 12, characterized in that the device (PE) acting in a polarizing fashion is designed as a function of wavelength in such a way that signals of the pumping signal optical wavelength (LPU) are influenced

- at least less strongly than signals of the sample signal optical wavelength (LPR) or
- in an opposite way by comparison with signals of the sample signal optical wavelength (LPR),

in particular with respect to their polarization and/or the strength of the components having the first polarization (P1) by comparison with the strength of the components having the second polarization (P2).

14. Device according to one of Claims 1 to 13, characterized in that the medium (NL) having a nonlinear effect is composed of pieces of polarization-conserving optical fibres, and in that the delay difference for optical signals of one conserved polarization is small by comparison with that of the other conserved polarization due to the fact that optical fibres with a positive delay difference as well as those with a negative delay difference for these optical signals are joined to one another.

15. Device according to one of Claims 1 to 14, characterized in that the optical Kerr effect serves as nonlinear effect, and the influence of the output-side sample signal components (PRA1, PRA2) occurs at least with respect to the phase of these sample signal components.

16. Device according to one of Claims 1 to 14, characterized in that the pumping signal addition point (K), connection (V) and medium (NL) are contained in a nonlinear optical fibre loop mirror or a nonlinear Sagnac interferometer.

17. Device according to one of Claims 1 to 14, characterized in that the pumping signal addition point (K), connection (V) and medium (NL) are contained in a device for optical four-wave mixing.

18. Device according to one of Claims 1 to 14, characterized in that the pumping signal addition point (K), connection (V) and medium (NL) are contained in a device for optical frequency shifting.

19. Nonlinear optical signal processing device having an optical coupler (KO1) which has at least two input ports (E1, E2) and at least two output ports (A1, A2) and whose first input port (E1) is designed for feeding an optical sample signal (PR) of a sample signal wavelength (LPR), having an optical loop connection (SCH) which is light-transmitting in both directions and which, with the inclusion of at least one medium (NL) having at least one non-negligible nonlinear optical effect, interconnects two output ports (A1, A2) of the coupler (KO1) in such a way that a first optical sample signal component (PRA1) emerging at a first output port (A1) of the coupler (KO1) is fed into a second output port (A2) of the coupler (KO1), and a second optical sample signal component (PRA2) emerging at the second output port (A2) of the coupler (KO1) is fed into the first output port (A1) of the coupler (KO1), with the result that components (PRE1, PRE2) of the optical sample signal emerge at at least one of the input ports (E1, E2) of the coupler (KO1), having at least one pumping signal addition point (KO8, KO9) at which at least one pumping signal (PU) of a pumping signal wavelength (LPU), which pumping signal has two pumping signal components (PUA6, PUA7) having mutually orthogonal polarizations (P6, P7) and/or from which two pumping signal components (PUA6, PUA7) having mutually orthogonal polarizations (P6, P7) are derived, and/or at least one of these pumping signal components (PUA6, PUA7) is guided from one input (KO82, KO92) to an output (KO83, KO93) of the relevant pumping signal addition point (KO8, KO9) and is fed into the optical loop connection (SCH), in which the sample signal component (PRA1) propagating from the first output port (A1) to the second output port (A2) of the coupler (KO1) is influenced by at least one non-negligible nonlinear optical effect in the optical loop connection (SCH) with respect to at least one of the variables of phase, polarization and amplitude in another way than the sample signal component (PRA2) propagating from the second to the first output port, with the result that in at least one of the variables of phase, polarization, amplitude and power the sample signal components (PRE1, PRE2) emerging from at least one of the input ports (E1, E2) of the coupler (KO1) are subjected as a function of at least one of the variables of phase, polarization, amplitude and power of at least one optical pumping signal (PU) and/or at least one of these pumping signal components (PUA6, PUA7) to an influence which is a function of the temporal variation of at least one optical pumping signal (PU) and/or at least one of these pumping signal components (PUA6, PUA7), in which these two pumping signal components (PUA6, PUA7) are fed into the medium (NL) in directions of propagation identical to the direction of propagation of a first sample signal component (PRA1), characterized in that the medium (NL) has at least two parts (NL8, NL9) which are arranged such that, at least in the case of the occurrence of a first polarization (P1) of this first sample signal component (PRA1), a first one of these parts (NL8) has this first pumping signal component (PUA6) in this first polarization (P1), but essentially has no second pumping signal component (PUA7) in this first polarization (P1) and that, at least in the case of the occurrence of a first polarization (P1) of this first sample signal component (PRA1), a second one of these parts (NL9) has this second pumping signal component (PUA7) in this first polarization (P1), but essentially has no first pumping signal component (PUA6) in this first polarization (P1), in that a first pumping signal addition point (KO8), a first one of these parts (NL8) of the medium (NL) and a second one of these parts (NL9) of the medium (NL) are arranged sequentially in the direction of propagation of these first sample signal components (PRA1), and in that in the case of the use of birefringent, polarization-conserving optical fibres the latter are arranged in the medium (NL) and/or parts (NL8, NL9) of the medium (NL) such that the polarizations of these pumping signal components (PUA6, PUA7) in the medium (NL) and/or parts (NL8, NL9) of the medium (NL) are equal to the principal polarization modes of these birefringent, polarization-conserving optical fibres.

20. Device according to Claim 19, characterized in that a second pumping signal addition point (KO9) is arranged between the first one of these parts (NL8) of the medium (NL) and the second one of these parts (NL9) of the medium (NL), in that the device has a polarization beam splitter (PBS), in that this polarization beam splitter (PBS), to which pumping signals (PU) of the pumping signal wavelength (LPU) are fed at an input (PBS1) of this polarization beam splitter (PBS), derives these two pumping signal components (PUA6, PUA7) on the output side from these input-side pumping signals (PU), in that an output (PBS6), having the first pumping signal component (PUA6), of the polarization beam splitter (PBS) is connected to an input (KO82) of the first pumping signal addition point (KO8), and in that an output (PBS7), having the second pumping signal component (PUA7), of the polarization beam splitter (PBS) is connected to an input (KO92) of the second pumping signal addition point (KO9) .

21. Device according to Claim 20, characterized in that the pumping signal component (PUA7) fed to the second pumping signal addition point (KO9) is delayed with respect to the pumping signal component (PUA6) fed to the first pumping signal addition point (KO8) in a delay line (VL) at least approximately by that time by which a first sample signal component (PRA1) is delayed between the first pumping signal addition point (KO8) and the second pumping signal addition point (KO9), with the result that in the case of strengths, differing from the value of zero, of the two pumping signal components (PUA6, PUA7) derived at a specific instant from a pumping signal (PU), these two pumping signal components (PUA6, PUA7) respectively influence the same temporal components of a first sample signal component (PRA1).

22. Device according to Claim 20 or 21, characterized in that inserted into the optical loop connection (SCH) between the first one of these parts (NL8) of the medium (NL) and the second pumping signal addition point (KO9) is an optical filter (OF) which attenuates the first pumping signal component (PUA6), with the result that the second one of these parts (NL9) of the medium (NL) essentially has no first pumping signal component (PUA6).

23. Device according to Claim 19, characterized in that the medium (NL) and/or the two parts (NL8, NL9) of the medium (NL) have birefringent polarization-conserving optical fibres with two mutually orthogonal principal polarization modes (P1, P2), in that a pumping signal (PU) having these two pumping signal components (PUA6, PUA7) can be guided into a first pumping signal addition point (KO8), and in that inserted between the two parts (NL8, NL9) of the medium (NL) is a wavelength-dependent polarization converter (PK) which, in the case of the occurrence on the input side of pumping signal components, having one of these principal polarization modes (P1, P2), of the pumping signal wavelength (LPU), and of first sample signal components (PRA1), having the same principal polarization modes (P1, P2), of the sample signal wavelength (LPR), generates on the output side pumping signal components of one principal polarization mode (P1) and first sample signal components (PRA1) of the principal polarization mode (P2) orthogonal thereto.

24. Device according to Claim 23, characterized in that the wavelength-dependent polarization converter (PK) has a birefringent polarization-conserving optical fibre whose principal polarization modes in each case enclose with the principal polarization modes (P1, P2) of the two parts (NL8, NL9) of the medium (NL) angles of ± 45°, and which has for signals of the pumping signal wavelength (LPU) a first whole number of half beat wavelengths, and for signals of the sample signal wavelength (LPR) has a second whole, in particular even number of half beat wavelengths which differs from the first whole number by an odd number, in particular 1 or -1.

25. Device according to one of Claims 23 to 24, characterized in that the medium (NL) and/or the parts (NL8, NL9) of the medium (NL) are assembled in each case from at least two birefringent, polarization-conserving optical fibre pieces (S1, S2, S3, S4 ...), and in that birefringent, polarization-conserving optical fibre pieces (S1, S3, ...) with a positive delay difference, and birefringent, polarization-conserving optical fibre pieces (S2, S4, ...) with a negative delay difference between optical signals of one conserved polarization with respect to optical signals of the other conserved polarization are joined to one another, with the result that the delay difference between optical signals of one conserved polarization with respect to optical signals of the other conserved polarization is smaller in the case of optical signal propagation through the entire medium (NL) than the delay difference for optical signals of one conserved polarization with respect to those of the other conserved polarization in at least one of the optical fibre pieces (S1, S2, S3, S4, ...).

**26.** Device according to one of Claims 23 to 25, characterized in that at least one sample signal leaving the device or one sample signal component (PR, PRK, PRA, PRE1, PRE2) is guided through at least one optical filter (OF) which attenuates signals of the pumping signal wavelength (LPU), with the result that this signal leaving the device essentially has no pumping signals (PU, PU2, PU3, PU4, PU5, PU6) or pumping signal components (PUA6, PUA7).

**27.** Device according to Claims 19 to 25, characterized in that the medium has the optical Kerr effect as nonlinear effect, and the influencing of the sample signals or of their components (PR, PRK, PRA, PRA1, PRA2) occurs at least with respect to the phase of these sample signals or their components.

**28.** Device according to Claim 27, characterized in that in the case of the same polarization (P8) as the first sample signal components (PRA1) having first pumping signal component (PRA6), these first sample signal components (PRA1) are influenced more strongly in the optical loop connection (SCH) with respect to their phase by at least approximately a phase angle of magnitude $3\pi$ than the second sample signal components (PRA2), with the result that in the case of first sample signal components (PRA1) having a polarization orthogonal to the polarization (P8) of the first pumping signal component (PRA6) these first sample signal components (PRA1) are influenced more strongly in the optical loop connection (SCH) with respect to their phase by at least approximately a phase angle of magnitude $\pi$ than the second sample signal components (PRA2), and the influencing of the power of emerging sample signal components (PRE1, PRE2) by an optical pumping signal (PU) and/or at least one pumping signal component (PUA6, PUA7) is independent of the polarization of an optical sample signal (PR).

**29.** Device according to one of the preceding claims, characterized in that as a nonlinear optical effect employed in the medium (NL), the device has a gain saturation of laser amplifiers, in particular semiconductor laser amplifiers.

**30.** Device according to one of the preceding claims, characterized in that as a nonlinear optical effect used in the medium (NL), the device has a nonlinear dependence of the optical output signal of a saturable absorber, in particular in the form of a semiconductor laser amplifier not electrically pumped, on the input signal of this absorber.

**31.** Device according to one of the preceding claims, characterized in that the device has a change in the refractive index of a waveguide, in particular a waveguide which is part of a nonlinear waveguide/grating coupler and/or which has a semiconductor material, in the medium (NL).

**32.** Device according to one of Claims 19 to 25, characterized in that it is possible to process in the device sample signals (PR), their components (PRK, PRA, PRA1, PRA2), pumping signals (PU, PU2, PU3, PU4, PU5) and/or pumping signal components (PRA6, PRA7), which are modulated with respect to at least one of the parameters of amplitude, polarization, wavelength, frequency and phase.

**33.** Device according to one of Claims 19 to 25, characterized in that birefringent, polarization-conserving optical fibre pieces occurring in the device, in particular in the medium (NL) and/or parts (NL8, NL9) of the medium (NL), have linear principal polarization modes or conserved polarizations.

## Revendications

**1.** Dispositif optique non-linéaire de traitement de signaux,
avec un additionneur de signaux de pompage (K), comprenant au moins une porte pour un signal de pompage (K1) pour l'injection d'un signal optique de pompage (PU) d'une longueur d'onde du signal de pompage (LPU), au moins une porte pour un signal de référence (K2) pour l'injection d'un signal optique de référence (PR) d'une longueur d'onde du signal de référence (LPR) et d'une première polarisation (P1) et au moins une porte de sortie (K3) à laquelle apparaissent au moins des fractions du signal de pompage (PU) comme signal de pompage couplé (PUK) et au moins des fractions du signal de référence (PR) comme signal de référence couplé (PRK), ainsi qu'un milieu (NL) présentant au moins un effet optique non-linéaire non-négligeable et ayant une entrée (NL1) vers laquelle sont transmis au moins partiellement, par l'intermédiaire d'une liaison optique (V), des signaux optiques qui sortent de la porte de sortie (K3) de l'additionneur de signaux de pompage (K), et une sortie (NL2) à laquelle apparaît le signal de référence (PRA) côté sortie soumis à l'effet optique non-linéaire et à laquelle peuvent apparaître au moins des fractions (PUA) du signal de pompage (PU), les signaux de référence couplés (PRK) étant soumis, par l'effet optique non-linéaire, à une influence au moins en ce qui concerne une des grandeurs phase, vitesse de propagation, teneur en fréquence, polarisation et puissance, influence qui dépend de la puissance et/ou de la variation dans le temps de la puissance du signal de pompage couplé (PUK) et/ou du signal de pompage (PU), le rapport de l'intensité (WP1) de l'effet non-linéaire dans le milieu (NL) concernant le signal de référence couplé (PRK) et provoqué par une première fraction (PUK1) du signal de pompage couplé (PUK) ayant une puissance déterminée ainsi qu'une première polarisation (P1), et de l'intensité (WP2) de l'effet non-linéaire dans le milieu (NL) concernant le signal de référence couplé (PRK) et provoqué par une deuxième fraction (PUK2) du signal de pompage couplé (PUK) ayant une puissance déterminée ainsi qu'une deuxième polarisation (P2) orthogonale à la première polarisation (P1), ce rapport ayant donc une valeur x , x étant un nombre positif, réel et différent de 1,

**caractérisé par**

le fait que l'additionneur de signaux de pompage (K) et ou un dispositif supplémentaire polarisant est constitué de telle sorte que des premières fractions (PU1) du signal de pompage optique (PU) qui génèrent une première fraction (PUK1) du signal de pompage couplé (PUK) ayant la première polarisation (P1) y sont atténuées plus fortement d'au moins approximativement le facteur x que des deuxièmes fractions (PU2) du signal de pompage (PU) qui génèrent une deuxième fraction (PUK2) du signal de pompage couplé (PUK) ayant la deuxième polarisation (P2), de telle sorte que l'influence et particulièrement la variation dans le temps de l'influence du signal de référence (PRA) côté sortie par le signal de pompage (PU) est au moins approximativement indépendante de la polarisation de ce signal de pompage (PU).

2. Dispositif selon la revendication 1,
   **caractérisé par**

   le fait que l'additionneur de signaux de pompage (K) contient un polariseur (PP) qui est parcouru par un signal de pompage (PU) lequel affaiblit les premières fractions (PU1) du signal de pompage, qui, elles, génèrent des premières fractions (PUK1) du signal de pompage couplé (PUK) avec la première polarisation (P1) à la porte de sortie (K3) de l'additionneur de signaux de pompage (K), les affaiblit donc plus fortement au moins approximativement d'un facteur x que des deuxièmes fractions (PU2) de signaux de pompage qui génèrent des deuxièmes fractions (PUK2) du signal de pompage couplé (PUK) avec la deuxième polarisation (P2) à la porte de sortie (K3) de l'additionneur de signaux de pompage (K), lequel a donc un rapport d'extinction de valeur x entre la polarisation (P1) qui est transmise sans modification et l'autre polarisation (P2) qui est transmise sans modification,
   le fait que l'entrée (PP1) du polariseur (PP) est reliée à la porte de signaux de pompage (K1) de l'additionneur de signaux de pompage (K),
   le fait que la sortie (PP2) du polariseur (PP) est reliée à la porte des signaux de pompage (K41) d'un coupleur (K4),
   le fait qu'une porte du signal de référence (K42) du coupleur (K4) est reliée à la porte du signal de référence (K1) de l'additionneur de signaux de pompage (K),
   le fait qu'une porte de sortie (K43) du coupleur (K4) est reliée à la porte de sortie (K3) de l'additionneur de signaux de pompage (K)
   et le fait que le coupleur (K4) a, pour des signaux de pompage (PU), un rapport de couplage au moins approximativement indépendant de la polarisation.

3. Dispositif selon la revendication 1,
   **caractérisé par**
   le fait que l'additionneur de signaux de pompage (K) est un coupleur dépendant de la polarisation au moins pour le signal de pompage (PU) et conçu de telle sorte que des premières fractions (PU1) du signal de pompage qui génèrent à la porte de sortie (K3) de l'additionneur des signaux de pompage (K) des premières fractions (PUK1) du signal de pompage couplé (PUK) avec la première polarisation (P1), sont, lors de la transmission de la porte d'entrée (K1) du signal de pompage vers la porte de sortie (K3) de ce coupleur qui dépend de la polarisation, couplées plus faiblement d'au moins approximativement un facteur x que des deuxièmes fractions (PU2) du signal de pompage qui génèrent à la porte de sortie (K3) de l'additionneur de signaux de pompage (K) des deuxièmes fractions (PUK2) du signal de pompage couplé (PUK) avec la deuxième polarisation (P2), de telle sorte qu'une possible dépendance du signal de référence (PR) du degré de couplage de ce coupleur dépendant de la polarisation est sans importance parce que le signal de référence (PR) a la première polarisation (P1) qui est connue.

4. Dispositif selon la revendication 3,
   **caractérisé par**
   le fait que le coupleur dépendant de la polarisation et représentant l'additionneur de signaux de pompage (K) est constitué de telle sorte qu'il

- transmet, dans le cas où le facteur x est plus grand que 1, les deuxièmes fractions (PU2) du signal de pompage au moins approximativement en totalité vers la porte de sortie (K3) de l'additionneur de signaux de pompage (K) et que,

- dans le cas où le facteur x est plus petit que 1, le coupleur transmet les premières fractions (PU1) de signal de pompage au moins approximativement en totalité vers la porte de sortie (K3) de l'additionneur de signaux de pompage (K).

5. Dispositif selon la revendication 3,
   **caractérisé par**
   le fait que le coupleur dépendant de la polarisation et représentant l'additionneur de signaux de pompage (K) est conçu de telle sorte qu'il couple des signaux de référence (PR) ayant au moins la première polarisation (P1) aussi complètement que possible de la porte du signal de référence (K2) à la porte de sortie (K3).

6. Dispositif selon les revendications 4 et / ou 5,
   **caractérisé par**
   le fait que le coupleur dépendant de la polarisation et représentant l'additionneur des signaux de pompage (K) a des intensités de couplage qui sont fonction de la longueur d'onde de signaux optiques injectés.

7. Dispositif optique non-linéaire de traitement de signaux,
   avec un additionneur de signaux de pompage (K), comprenant au moins une porte de signaux de pompage (K1) pour l'injection d'un signal optique de pompage (PU) d'une longueur d'onde du signal de pompage (LPU), au moins une porte de signal de référence (K2) pour l'injection d'un signal optique de référence (PR) d'une longueur d'onde de signal de référence (LPR) et une première polarisation (P1) et au moins une porte de sortie (K3) à laquelle apparaissent au moins des fractions du signal de pompage (PU) en tant que signaux de pompage couplés (PUK) et au moins des fractions du signal de référence (PR) en tant que signal de référence couplé (PRK), ainsi qu'un milieu (NL) présentant au moins un effet optique non-linéaire et non-négligeable avec une entrée (NL1) vers laquelle sont transmis au moins partiellement, par l'intermédiaire d'une liaison optique (V), des signaux optiques qui sortent de la porte de sortie (K3) de l'additionneur des signaux de pompage (K) et avec une sortie (NL2) à laquelle apparaît le signal de référence (PRA) côté sortie, après avoir été soumis à l'effet optique non-linéaire, et à laquelle peuvent apparaître au moins des fractions (PUA) du signal de pompage (PU), les signaux de référence (PRK) étant, en raison de l'effet optique non-linéaire, soumis à une influence au moins en ce qui concerne une des grandeurs phase, vitesse de propagation, teneur en fréquence, polarisation et puissance, influence qui dépend de la puissance et/ou de la variation dans le temps de la puissance du signal de pompage couplé (PUK) et/ou du signal de pompage (PU), le rapport de l'intensité (WP1) de l'effet non-linéaire dans le milieu (NL) subi par le signal de référence couplé (PRK) et provoqué par une première fraction (PUK1) du signal de pompage couplé (PUK) ayant une puissance déterminée ainsi qu'une première polarisation (P1), et de l'intensité (WP2) de l'effet non-linéaire dans le milieu (NL) subi par le signal de référence couplé (PRK) et provoqué par une deuxième fraction (PUK2) du signal de pompage couplé (PUK) ayant une puissance déterminée ainsi qu'une deuxième polarisation (P2) orthogonale à la première polarisation (P1), ayant une valeur x , x étant un nombre positif, réel et différent de 1,
   **caractérisé par**

   le fait qu'un dispositif de mesure (ME) est constitué de telle sorte qu'au moins des parties des fractions de signal de référence (PRA) ou des signaux qui en sont dérivés (AGPRA) côté sortie, les uns et les autres ayant été influencés par un effet optique non-linéaire, puissent être dirigés vers son entrée (ME1),
   le fait que ce dispositif de mesure (ME) est constitué de telle sorte qu'un signal de mesure (MES) qui apparaît à une sortie (ME2) de ce dispositif de mesure (ME) dépend

   - de l'intensité de l'influence subie par les fractions du signal de référence (PRA) et due à un effet optique non-linéaire et / ou

   - de la différence entre l'intensité de l'influence subie par les fractions du signal de référence (PRA) et due à un effet optique non-linéaire et une valeur de consigne prédéterminée et souhaitée de l'intensité de l'influence,

   le fait qu'une entrée (R1) d'un régulateur (R) est reliée à une sortie (ME2) de ce dispositif de mesure (ME),

le fait qu'un signal de réglage (RS) apparaît à une sortie (R2) de ce régulateur (R), le fait qu'une sortie (R2) de ce régulateur (R) est reliée à une entrée de réglage (ST3) d'un organe de réglage (ST),

le fait que le signal de pompage (PU) - qui entre dans cet organe de réglage (ST) par une entrée (ST1) et ressort de cet organe de réglage (ST) par une sortie (ST2) - est soumis, au moins en ce qui concerne une des valeurs polarisation et puissance, à une variation qui dépend de ce signal de réglage (RS) de telle sorte que l'influence et, en particulier, la variation dans le temps de cette influence des fractions du signal de référence (PRA) qui sortent, influence produite par le signal optique de pompage (PU), sont, au moins approximativement, indépendantes de la polarisation de ce signal de pompage (PU).

8. Dispositif selon la revendication 7,
**caractérisé par**

le fait que l'organe de réglage (ST) soumet le signal de pompage (PU) à une variation en ce qui concerne sa puissance,
le fait que l'organe de réglage (ST) comporte

- un modulateur d'amplitude ou
- un amplificateur

optiques réglables par le signal de réglage (RS) appliqué à l'entrée de réglage (ST3),
le fait que la puissance des signaux de pompage qui apparaissent à la sortie (ST2) de cet organe de réglage (ST) en présence d'un signal de pompage optique (PU) qui se compose exclusivement de premières fractions (PU1), lesquelles génèrent une première fraction (PUK1) du signal de pompage optique couplé (PUK), cette première fraction ayant la première polarisation (P1), cette puissance donc des signaux de pompage est affaiblie plus fortement et/ou moins amplifiée par cet organe de réglage (ST) d'au moins approximativement le facteur x qu'en présence d'un signal de pompage optique (PU) qui se compose exclusivement de deuxièmes fractions (PU2), lesquelles génèrent une deuxième fraction (PUK2) du signal de pompage optique couplé (PUK), cette deuxième fraction ayant la deuxième polarisation (P2).

9. Dispositif selon la revendication 7,
**caractérisé par**

le fait que l'organe de réglage (ST) soumet le signal de pompage (PU) à une variation en ce qui concerne sa polarisation,
le fait que l'organe de réglage (ST) comporte un organe optique de réglage de polarisation réglable par un signal de réglage (RS) appliqué à l'entrée de réglage (ST3),
le fait que la polarisation de signaux de pompage apparaissant à la sortie (ST2) de l'organe de réglage (ST) est indépendante du signal de pompage (PU) qui apparaît côté entrée.

10. Dispositif selon une des revendications 1 à 9,
**caractérisé par**
le fait qu'il est prévu un dispositif (PE) à action polarisante au moins pour des signaux optiques de la longueur d'onde (LPR) du signal de référence, dispositif dans lequel une première fraction du signal de référence (PRK1) ayant la première polarisation (P1) est transmise d'une manière plus forte qu'une deuxième fraction du signal de référence (PRK2) ayant la deuxième polarisation (P2) de telle sorte que la polarisation des fractions du signal de référence (PRA) côté sortie est au moins approximativement indépendante de la polarisation du signal de pompage (PU).

11. Dispositif selon la revendication 10,
**caractérisé par**
le fait que le milieu (NL) comprend le dispositif à action polarisante (PE) et/ou présente la fonction d'un dispositif à action polarisante (PE).

12. Dispositif selon la revendication 10,
**caractérisé par**

le fait qu'une entrée (PE1) du dispositif à action polarisante (PE) est reliée à une sortie (NL2) du milieu (NL) et le fait que les fractions du signal de référence (PRA) côté sortie apparaissent à une sortie (PE2) du dispositif à action polarisante (PE).

13. Dispositif selon une des revendications 10 à 12,
**caractérisé par**

le fait que le dispositif à action polarisante (PE) est conçu avec une dépendance de la longueur d'onde de telle sorte que des signaux de la longueur d'onde lumineuse du signal de pompage (LPU) sont influencés, particulièrement en ce qui concerne leur polarisation et/ou la force des composantes ayant la première polarisation (P1) par rapport à la force des composantes ayant la deuxième polarisation (P2),

- au moins d'une manière moins forte que des signaux de la longueur d'onde lumineuse du signal de référence (LPR)

ou

- d'une façon inverse par rapport à des signaux de la longueur d'onde lumineuse du signal de référence (LPR).

14. Dispositif selon une des revendications 1 à 13,
**caractérisé par**

le fait que le milieu (NL) présentant un effet non-linéaire est composé de morceaux de guides d'ondes lumineuses qui maintiennent la polarisation,
le fait que la différence de temps de propagation pour des signaux lumineux de l'une des polarisations maintenues par rapport à ceux de l'autre polarisation maintenue est faible parce que des guides d'ondes lumineuses ayant une différence de temps de propagation positive pour ces signaux lumineux sont accolés à des guides d'ondes lumineuses ayant une différence de temps de propagation négative pour ces signaux lumineux.

15. Dispositif selon une des revendications 1 à 14,
**caractérisé par**
le fait que le phénomène optique de Kerr sert d'effet non-linéaire et que l'influence sur des fractions du signal de référence (PAR1, PRA2) côté sortie apparaît au moins en ce qui concerne la phase de ces fractions de signal de référence.

16. Dispositif selon une des revendications 1 à 14,
**caractérisé par**
le fait qu'additionneur du signal de pompage (K), liaison (V) et milieu (NL) sont compris dans un miroir optique non-linéaire à boucle de fibre ou dans un interféromètre de Sagnac non-linéaire.

17. Dispositif selon une des revendications 1 à 14,
**caractérisé par**
le fait qu'additionneur de signaux de pompage (K), liaison (V) et milieu (NL) sont compris dans un dispositif pour le mélange optique à quatre ondes.

18. Dispositif selon une des revendications 1 à 14,
**caractérisé par**
le fait qu'additionneur de signaux de pompage (K), liaison (V) et milieu (NL) sont compris dans un dispositif pour le décalage optique de fréquence.

19. Dispositif optique non-linéaire de traitement de signaux,

avec un coupleur optique (KO1) qui comporte au moins deux portes d'entrée (E1, E2) et au moins deux portes de sortie (A1, A2), la première porte d'entrée (E1) étant conçue pour l'injection d'un signal optique de référence (PR) d'une longueur d'onde de signal de référence (LPR),
avec une liaison optique à boucle SCH passante dans les deux sens qui relie les deux portes de sortie (A1, A2) du coupleur (KO1) en incluant au moins un milieu (NL) ayant au moins un effet optique non-linéaire non-négligeable de telle sorte qu'une première fraction du signal optique de référence (PRA1) sortant d'une première porte de sortie (A1) du coupleur (KO1) est injectée dans une deuxième porte de sortie (A2) du coupleur (KO1) et qu'une deuxième fraction du signal optique de référence (PRA2) sortant de la deuxième porte (A2) du coupleur (KO1) est injectée dans la première porte de sortie (A1) du coupleur (KO1) de telle sorte que des fractions (PRE1, PRE2) du signal optique de référence sortent par au moins une des portes d'entrée (E1, E2) du coupleur (KO1),

avec au moins un additionneur de signaux de pompage (KO8, KO9) dans lequel ou dans lesquels au moins un signal de pompage (PU) d'une longueur d'onde de signal de pompage (LPU) - lequel comporte deux composantes du signal de pompage (PUA6, PUA7) avec des polarisations (P6, P7) orthogonales entre elles ou duquel sont dérivées deux composantes du signal de pompage (PUA6, PUA7) avec des polarisations (P6, P7) orthogonales entre elles - et/ou au moins une de ces composantes du signal de pompage (PUA6, PUA7) sont conduites d'une entrée (KO82, KO92) à une sortie (KO83, KO93) de l'additionneur de signaux de pompage correspondant (KO8, KO9) et injectées dans la liaison optique à boucle (SCH),

dans lequel la fraction du signal de référence (PRA1) qui se propage de la première porte de sortie (A1) vers la deuxième porte de sortie (A2) du coupleur (KO1), est influencée par au moins un effet optique non-linéaire non-négligeable dans la liaison optique à boucle (SCH) au moins en ce qui concerne une des grandeurs phase, polarisation et amplitude, d'une autre façon que la fraction du signal de référence (PRA2) qui se propage de la deuxième vers la première porte de sortie de telle sorte que les fractions du signal de référence (PRE1, PRE2) qui sortent d'au moins une des portes d'entrée (E1, E2) du coupleur (KO1) sont soumises à une influence au moins en ce qui concerne une des grandeurs phase, polarisation, amplitude et puissance en fonction d'au moins une des grandeurs phase, polarisation, amplitude et puissance d'au moins un signal optique de pompage (PU) et / ou au moins une de ces composantes du signal de pompage (PUA6, PUA7), influence qui dépend de la variation dans le temps d'au moins un signal optique de pompage (PU) et / ou au moins une de ces composantes du signal de pompage (PUA6, PUA7),

dans lequel ces deux composantes de signal de pompage (PUA6, PUA7) sont injectées dans le milieu (NL) dans des directions de propagation identiques à la direction de propagation d'une première fraction du signal de référence (PAR1),

**caractérisé par**

le fait que le milieu (NL) comporte au moins deux parties (NL8, NL9) qui sont agencées de telle sorte qu'une première de ces parties (NL8) présente, au moins en présence d'une première polarisation (P1) de cette première fraction du signal de référence (PRA1), cette première composante du signal de pompage (PUA6) dans cette première polarisation (P1), mais essentiellement pas de deuxième composante du signal de pompage (PUA7) dans cette première polarisation (P1) et de telle sorte qu'une deuxième de ces parties (NL9) présente, au moins en présence d'une première polarisation (P1) de cette première fraction du signal de référence (PRA1), cette deuxième composante du signal de pompage (PUA7) dans cette première polarisation (P1), mais essentiellement pas de première composante du signal de pompage (PUA6) dans cette première polarisation (P1),

le fait qu'un premier additionneur de signaux de pompage (KO8), une première de ces parties (NL8) du milieu (NL) et une deuxième de ces parties (NL9) du milieu (NL) sont disposés l'un derrière l'autre dans le sens de la propagation de cette première fraction du signal de référence (PRA1),

le fait que, lors de l'utilisation de guides d'ondes lumineuses biréfringents et qui maintiennent la polarisation dans le milieu (NL) et/ou dans des parties (NL8, NL9) du milieu (NL), ceux-ci sont disposés de telle sorte que les polarisations de ces composantes du signal de pompage (PUA6, PUA7) dans le milieu (NL) sont égales aux modes de polarisation principale de ces guides d'ondes lumineuses biréfringents et qui maintiennent la polarisation.

**20.** Dispositif selon la revendication 19,
**caractérisé par**

le fait qu'un deuxième additionneur de signaux de pompage (KO9) est placé entre la première de ces parties (NL8) du milieu (NL) et la deuxième de ces parties (NL9) du milieu (NL),

le fait que le dispositif comporte un diviseur de faisceau à polarisation (PBS),

le fait que ce diviseur de faisceau à polarisation (PBS) - vers lequel des signaux de pompage (PU) de la longueur d'onde du signal de pompage (LPU) sont conduits à une entrée (PBS1) de ce diviseur de faisceau à polarisation (PBS) - produit, à partir de ces signaux de pompage (PU) côté entrée, ces deux composantes du signal de pompage (PUA6, PUA7) côté sortie,

le fait qu'une sortie (PBS6) du diviseur de faisceau à polarisation (PBS) présentant la première composante du signal de pompage (PUA6) est reliée à une entrée (KO82) du premier additionneur de signaux de pompage (KO8),

le fait qu'une sortie (PBS7) du diviseur de faisceau à polarisation (PBS) présentant la deuxième composante du signal de pompage (PUA7) est reliée à une entrée (KO92) du deuxième additionneur de signaux de pompage (KO9).

21. Dispositif selon la revendication 20,
    **caractérisé par**
    le fait que la composante du signal de pompage (PUA7) qui est envoyée au deuxième additionneur de signaux de pompage (KO9) est retardée dans une ligne à retardement (VL), par rapport à la composante du signal de pompage (PUA6) qui est envoyée au premier additionneur de signaux de pompage (KO8), au moins approximativement d'un laps de temps égal à celui dont est retardée une première fraction du signal de référence (PRA1) entre le premier additionneur de signaux de pompage (KO8) et le deuxième additionneur de signaux de pompage (KO9), de telle sorte que, dans le cas où les deux composantes du signal de pompage (PUA6, PUA7) dérivées d'un signal de pompage (PU) à un moment déterminé ont des intensités différentes de la valeur zéro, ces deux composantes du signal de pompage (PUA6, PUA7) influencent respectivement les mêmes fractions temporaires d'une première fraction du signal de référence (PRA1).

22. Dispositif selon les revendications 20 et 21,
    **caractérisé par**
    le fait qu'un filtre optique (OF) est introduit dans la liaison optique à boucle (SCH) entre la première de ces parties (NL8) du milieu (NL) et le deuxième additionneur de signaux de pompage (KO9), filtre qui atténue la première composante de signal de pompage (PUA6) de telle sorte que la deuxième de ces parties (NL9) du milieu (NL) ne présente essentiellement pas de première composante de signal de pompage (PUA6).

23. Dispositif selon la revendication 19,
    **caractérisé par**

    le fait que le milieu (NL) et/ou les deux parties (NL8, NL9) du milieu (NL) comportent des guides d'ondes lumineuses biréfringents et qui maintiennent la polarisation avec deux modes de polarisation principale (P1, P2) orthogonaux entre eux,
    le fait qu'un signal de pompage (PU) qui comporte ces deux composantes du signal de pompage (PUA6, PUA7) peut être envoyé dans un premier additionneur de signaux de pompage (KO8),
    le fait qu'entre les deux parties (NL8, NL9) du milieu (NL) est introduit un convertisseur de polarisation (PK) dépendant de la longueur d'onde lequel, en présence côté entrée d'une composante du signal de pompage de longueur d'onde du signal de pompage (LPU) présentant un de ces modes de polarisation principale (P1, P2) et de premières fractions du signal de référence (PRA1) de la longueur d'onde du signal de référence (LPR) présentant le même mode de polarisation principale (P1, P2), produit côté sortie des composantes du signal de pompage du mode de polarisation principale (P1) et des premières fractions du signal de référence (PRA1) du mode de polarisation principale (P2) qui lui est orthogonal.

24. Dispositif selon la revendication 23,
    **caractérisé par**
    le fait que le convertisseur de polarisation (PK) dépendant de la longueur d'onde comporte un guide d'ondes lumineuses biréfringent et qui maintient la polarisation dont les modes de polarisation principale présentent chacun des angles de ± 45° avec les modes de polarisation principale (P1, P2) des deux parties (NL8, NL9) du milieu (NL) et qui présente, pour des signaux de la longueur d'onde du signal de pompage (LPU), un premier nombre entier de demi-longueurs d'interférence et, pour des signaux de la longueur d'onde du signal de référence (LPR), un deuxième nombre entier, particulièrement un nombre pair, de demi-longueurs d'interférence qui se distingue du premier nombre entier par un nombre impair, particulièrement par ou -1.

25. Dispositif selon une des revendications 23 à 24,
    **caractérisé par**

    le fait que le milieu (NL) et / ou les parties (NL8, NL9) du milieu (NL) sont constitués d'au moins deux morceaux (S1, S2, S3, S4, ...) de guides d'ondes lumineuses biréfringents et qui maintiennent la polarisation,
    le fait que des morceaux (S1, S3, ...) de guides d'ondes lumineuses biréfringents et qui maintiennent la polarisation avec une différence de durée de propagation positive pour des signaux lumineux d'une des polarisations maintenues par rapport à des signaux lumineux de l'autre polarisation maintenue sont accolés à des morceaux (S2, S4, ...) de guides d'ondes lumineuses biréfringents et qui maintiennent la polarisation avec une différence de durée de propagation négative pour des signaux lumineux d'une des polarisations maintenues par rapport à des signaux lumineux de l'autre polarisation maintenue de telle sorte que la différence de durée de propagation entre les signaux lumineux d'une des polarisations maintenues par rapport aux signaux lumineux de l'autre polarisation maintenue est, dans le cas d'une propagation du signal lumineux à travers la totalité du milieu (NL), plus faible que la différence de durée de propagation pour des signaux lumineux de l'une des polarisations maintenues par rapport à celle de signaux de l'autre polarisation maintenue, au moins dans un des morceaux (S1, S2, S3, S4, ...) de guides d'ondes lumineuses.

26. Dispositif selon une des revendications 23 à 25,
   **caractérisé par**
   le fait qu'au moins un signal de référence ou une fraction du signal de référence (PR, PRK, PRA, PRE1, PRE2) qui quitte le dispositif, est conduit au moins à travers un filtre optique (OF) qui atténue les signaux de la longueur d'onde du signal de pompage (LPU) de telle sorte que ce signal qui quitte le dispositif ne comporte essentiellement pas de signaux de pompage (PU, PU2, PU3, PU4, PU5, PU6) ni de composantes du signal de pompage (PUA6, PUA7).

27. Dispositif selon les revendications 19 à 25,
   **caractérisé par**
   le fait que le milieu présente le phénomène optique de Kerr en tant qu'effet non-linéaire et qu'il apparaît une influence des signaux de référence ou de leurs fractions (PR, PRK, PRA, PRE1, PRE2) au moins en ce qui concerne la phase de ces signaux de référence ou de leurs fractions.

28. Dispositif selon la revendication 27,
   **caractérisé par**
   le fait que, en présence de premières fractions (PRA1) du signal de référence qui présentent la même polarisation (P8) que la première composante (PRA6) du signal de pompage, ces premières fractions du signal de référence (PRA1) sont influencées dans la liaison optique à boucle (SCH), en ce qui concerne leur phase, plus fortement d'au moins approximativement un angle de phase de la valeur $3\pi$ que les deuxièmes fractions (PRA2) du signal de référence, de telle sorte que - en présence de premières fractions (PRA1) du signal de référence présentant une polarisation orthogonale à la polarisation (P8) de la première composante du signal de pompage (PRA6), ces premières fractions (PRA1) du signal de référence sont influencées dans la liaison optique à boucle (SCH), en ce qui concerne leur phase, plus fortement d'au moins approximativement un angle de phase de la valeur $\pi$ que les deuxièmes fractions du signal de référence (PRA2) et l'influence de la puissance des fractions sortantes du signal de référence (PRE1, PRE2) par un signal optique de pompage (PU) et / ou au moins une composante du signal de pompage (PUA6, PUA7) est indépendante de la polarisation d'un signal optique de référence (PR).

29. Dispositif selon une des revendications précédentes,
   **caractérisé par**
   le fait que le dispositif présente, en tant qu'effet optique non-linéaire utilisé dans le milieu (NL), une saturation de gain d'amplificateurs laser, particulièrement d'amplificateurs laser à semi-conducteurs.

30. Dispositif selon une des revendications précédentes,
   **caractérisé par**
   le fait que le dispositif présente, en tant qu'effet optique non-linéaire utilisé dans le milieu (NL), une dépendance non-linéaire du signal optique de sortie d'un absorbeur saturable en fonction du signal d'entrée de cet absorbeur, particulièrement quand il a la forme d'un amplificateur laser à semi-conducteurs sans pompage électrique.

31. Dispositif selon une des revendications précédentes,
   **caractérisé par**
   le fait que le dispositif présente, dans le milieu (NL), une variation de l'indice de réfraction d'un guide d'ondes, particulièrement d'un guide d'ondes qui fait partie d'un coupleur non-linéaire à grille de guide d'ondes.

32. Dispositif selon une des revendications 19 à 25,
   **caractérisé par**
   le fait que des signaux de référence (PR), leurs fractions (PRK, PRA, PRA1, PRA2), des signaux de pompage (PU, PU2, PU3, PU4, PU5) et / ou des composantes du signal de pompage (PRA6, PRA7) qui sont modulés au moins en ce qui concerne un des paramètres amplitude, polarisation, longueur d'onde, fréquence et phase, peuvent être traités dans le dispositif.

**33.** Dispositif selon une des revendications 19 à 25,
**caractérisé par**
le fait que des morceaux de guides d'ondes lumineuses biréfringents et maintenant la polarisation qui interviennent dans le dispositif, particulièrement dans le milieu (NL) et / ou dans les parties (NL8, NL9) du milieu (NL), présentent des modes de polarisation principale linéaires ou des polarisations maintenues.

FIG 1

FIG 2

FIG 3

FIG 4

FIG 5

FIG 6

FIG 7

FIG 8